# EUROPÄISCHE PATENTSCHRIFT

(11) **EP 1 803 965 B1**
(45) Veröffentlichungstag und Bekanntmachung des Hinweises auf die Patenterteilung: **18.03.2015**
(21) Anmeldenummer: 06026425.6
(22) Anmeldetag: 20.12.2006
(51) Int. Cl.: F16F 15/023, B23Q 1/38, F16C 29/02

(54) **Isolatorgeometrie eines Schwingungsisolationssystems**
Insulation geometry of a vibration insulation system
Géométrie isolatrice d'un système d'isolation vibratoire

(30) Priorität: 30.12.2005 EP 05028712
(43) Veröffentlichungstag der Anmeldung: 04.07.2007
(73) Patentinhaber: Integrated Dynamics Engineering GmbH, 65479 Raunheim (DE)
(72) Erfinder: Heiland, Peter, 65479 Raunheim (DE)
(74) Vertreter: Herden, Andreas F.

(56) Entgegenhaltungen:
- EP-A- 0 927 380
- EP-A- 1 803 963
- US-A1- 2004 065 517

## Beschreibung

### Beschreibung der Erfindung

Die vorliegende Erfindung betrifft ein luftgelagertes Federsystem zur Schwingungsisolation.

### Hintergrund der Erfindung

Zur Konstruktion und für den Bau von äußerst niederfrequenten Schwingungsisolatoren für seismische Schwingungsverhältnisse werden oftmals Luftlagersysteme oder -module verwendet. Luftlager haben oft den Nachteil eines hohen Luftverbrauchs und der Störempfindlichkeit gegenüber Schwankungen des Versorgungsluftdrucks. Darüber hinaus generieren Luftlager aufgrund nicht-laminarer Luftströmungsverhältnisse und des damit verbundenen Strömungsabrisses Kraftrauschen, welches sich als Eigenrauschen des Schwingungsisolators bemerkbar macht und beim Einsatz von niederfrequenten Isolatoren für besonders kleine Schwingungsamplituden von kleiner als etwa 1 µm keine akzeptable Isolierung mehr zuläßt.

Darüber hinaus gibt es Bauformen, bei denen integrierte vertikale und horizontale Luftlager zur vereinfachten und preisgünstigen Isolierung eingesetzt werden. Hierbei entsteht eine Kopplung der Kraft- und Bewegungsverhältnisse beider Lager, die grundsätzlich unerwünscht ist.

Beim Einsatz der vorstehend beschriebenen Luftlagerisolatoren insbesondere für vibrationsempfindliche photolithografische Geräte besteht ein besonderes Problem darin, daß die typisch zu lagernden Massen in der Größenordnung von 2500 bis 4000 kg liegen, typischerweise jedoch nicht mehr als drei Isolatormodule Verwendung finden können und die Module nur ein minimales Volumen einnehmen dürfen.

Zu diesem Zweck sind Systeme bekannt, welche über eine Aufteilung in drei Lagerelemente verfügen, ein sogenannter Lagerboden oder eine Bodenplatte, ein innerer Kolben und ein äußerer Zylinder. Eine solche Lagerung ist insbesondere in dem Dokument EP 0 927 380 B1 beschrieben.

Mit der beschriebenen Technik werden Eigenfrequenzen des Schwingungsisolationssystems von kleiner als etwa 1 Hz für Massen in der Größenordnung von etwa 500 kg erreicht. Es ist unter Umständen auch möglich, Eigenfrequenzen von etwa 0,4 Hz zu erzielen.

Ein entscheidender Nachteil des Standes der Technik ist eine geringe Tragfähigkeit von max. 1019 kg und ein erhöhter Luftverbrauch von etwa 150 1/min pro System (drei Isolatoren) und damit verbundene Unkosten.

Das Dokument WO 0 927 380 A1 zeigt ein Schwingungsisolationssystem mit Luftlagern, die eine Basisplatte, ein Zwischenteil und einen Kolben umfassen.

### Aufgabe der Erfindung

Vor diesem Hintergrund hat sich die vorliegende Erfindung zur Aufgabe gestellt, eine Isolatorgeometrie oder ein Federsystem mit erhöhter Tragkraft bereitzustellen.

Vorzugsweise sollte die erhöhte Tragkraft gleichzeitig mit einem möglichst kleinem Bauraum und möglichst geringem Gasverbrauch, insbesondere von Luft, realisiert werden. Dabei ist zu berücksichtigen, daß eine Druckluftversorgung mit mehr als 8 bar typischerweise nicht zur Verfügung steht.

Insbesondere sollte die genannten Anforderungen bei bekannten Federsystemen realisiert werden, ohne deren einzunehmenden Bauraum wesentlich zu vergrößern.

Es sollten hierbei die isolierenden Eigenschaften des Federsystems möglichst gut und das Kraftrauschen des Systems möglichst gering sein.

### Allgemeine Beschreibung der Erfindung

Gelöst wird diese Aufgabe bereits durch ein Federsystem gemäß Anspruch 1. Vorteilhafte Ausführungsformen sind Gegenstand der Unteransprüche.

Dabei umfaßt die vorliegende Erfindung ein Federsystem zur Schwingungsisolation und/oder zur Dämpfung, insbesondere ein vertikal und/oder horizontal wirksames Luftlager, umfassend eine Basisplatte, ein Zwischenteil, das auf der Basisplatte beweglich angeordnet ist und sich, insbesondere im Betriebszustand, horizontal und/oder vertikal zu dieser bewegen kann und einen Kolben, der innerhalb des Zwischenteils beweglich angeordnet ist und eine Last trägt, die gegenüber der Basisplatte in horizontaler und/oder vertikaler Richtung schwingungsisoliert und/oder gedämpft gestützt werden soll. Um bei möglichst geringem Bauraum des Federsystems eine möglichst große Traglast des Federsystems erreichen zu können, welche durch den Durchmesser des Kolbens mitbestimmt ist und um eine möglichst geringe Wandstärke wählen zu können, ist bei dem Federsystem der Durchmesser DK1 der Oberseite des Kolbens zu der Wandstärke DZW des Zwischenteils in einem Verhältnis von 10 bis 36 oder bevorzugt von 10 bis 16. In einer besonders bevorzugten Ausführungsform beträgt das Verhältnis von 10,7 bis 15,1.

Dabei sind der Durchmesser DK1 der Oberseite des Kolbens und der Durchmesser DZI der Innenseite des Zwischenteils derart gewählt, so daß, insbesondere im Betriebszustand, ein Spalt zwischen dem oberen Bereich der Außenseite des Kolbens, vorzugsweise zwischen der äußeren Oberkante des Kolbens, und der gegenüberliegenden Wand oder Innenwand des Zwischenteils, insbesondere dem Bereich der inneren Oberkante des Zwischenteils, ausgebildet ist. Um den Luftverbrauch des Federsystems dabei möglichst gering zu halten, sollte dieser Spalt im Rahmen der Fertigungsmöglichkeiten möglichst klein gehalten werden. Dabei hat es sich als vorteilhaft erwiesen, daß die Wandstärke DZW des Zwischenteils zu der Breite des Spalts in einem Verhältnis von etwa 1700 bis etwa 5000 oder bevorzugt von etwa 2400 bis etwa 3000 liegt. Der Spalt besitzt dabei eine Breite von kleiner als 10 µm, bevorzugt von etwa 3 µm bis etwa 7 µm. In einer besonders bevorzugten Ausführungsform besitzt der Spalt eine Breite von etwa 5 µm.

Zur vertikalen und horizontalen Lagerung ist zwischen der Außenseite des Kolbens und der Innenseite des Zwischenteils und/oder zwischen einer Unterseite des Zwischenteils und einer Oberseite der Basisplatte vorzugsweise jeweils ein insbesondere konischer Spalt, vorzugsweise ein Luftspalt, ausgebildet. Die größte Erstreckung des Spalts zwischen der Außenseite des Kolbens und der Innenseite des Zwischenteils liegt im wesentlichen auf der Höhe der Einschnürung. Die größte Erstreckung des Spalts besitzt dabei eine Länge von etwa 1 µm bis etwa 10 µm, bevorzugt von etwa 3 µm bis etwa 7 µm. In einer besonders bevorzugt Ausführungsform beträgt die Spaltbreite etwa 5 µm. Die Einschnürung liegt in einer Ausführungsform auf einer Höhe, gemessen zur Grundfläche des Kolbens, von etwa 91,5 mm.

Vorzugsweise wird das Federsystem mit Luft betrieben. Die Verwendung anderer Gase ist ebenfalls möglich. Beispielsweise könnte sich auch ein inertes Gas als vorteilhaft erweisen, wenn beispielsweise entsprechende Anforderungen hinsichtlich einer schwach oxidierenden Atmosphäre vorliegen.

Das Federsystem weist einen Kolben auf, umfassend einen beidseitig zumindest abschnittsweise geöffneten hohlen Körper, welcher durch Grundfläche, Deckfläche, Mantel und eine durch den Mittelpunkt der Grundfläche und den Mittelpunkt der Deckfläche verlaufende Achse definiert ist, wobei die Außenseite des Mantels zumindest abschnittsweise durch einen oberen Kegelstumpf und einen unteren Kegelstumpf, vorzugsweise mit kreisförmiger Grundfläche, gebildet ist, welche eine gemeinsame oder gleiche Deckfläche haben, so daß in der Außenseite des Mantels eine Einschnürung geformt ist und die Außenseite des oberen Kegelstumpfs einen oberen Winkel Kα1 mit der Achse des Kolbens einschließt und die Außenseite des unteren Kegelstumpfs mit der Achse des Kolbens einen unteren Winkel Kα2 einschließen. Gemäß der Erfindung hat der Kolben einen oberen Winkel Kα1 von 0,0001° bis 0,1°, bevorzugt von 0,001° bis 0,02°, besonders bevorzugt von 0,004° bis 0,006° und einen unteren Winkel Kα2 von 0,0001° bis 0,1°, bevorzugt von 0,001° bis 0,02°, besonders bevorzugt von 0,004° bis 0,006°.

Die vorzugsweise identischen Deckflächen der Kegelstümpfe liegen koaxial auf- oder ineinander, so daß in der Außenseite des Mantels die genannte Einschnürung in der Ebene der gemeinsamen Deckfläche geformt ist. Der Kolben besitzt vorliegend eine Gesamthöhe KGES von 130 mm bis 190 mm oder bevorzugt von 150 mm bis 160 mm. Der Aufbau des Kolbens ist nachfolgend abschnittsweise beschrieben.

Die Oberseite des hohlen Körpers weist einen Durchmesser DK1 von 120 mm bis 200 mm, bevorzugt von 161 mm bis 181 mm, besonders bevorzugt von 159 mm bis 163 mm auf. Die Deckplatte des Kolbens besitzt eine Dicke von 30 mm bis 40 mm oder bevorzugt von etwa 34 mm. In einer Außenseite der Deckplatte ist, vorzugsweise koaxial zur Achse des Kolbens, eine Ausnehmung oder Vertiefung eingebracht. Die Vertiefung weist einen Durchmesser DK27 von 30 mm bis 70 mm oder bevorzugt von 45 mm bis 55 mm und eine Tiefe K27 von 10 mm bis 30 mm oder bevorzugt von 18 mm bis 22 mm auf, wobei die Wand der Vertiefung im wesentlichen parallel und der Boden der Vertiefung im wesentlichen senkrecht zur Achse des Kolbens liegt. Zusätzlich ist in der Deckplatte, vorzugsweise auch koaxial zur Achse des Kolbens, eine insbesondere kreisförmige Öffnung eingebracht.

Der Innendurchmesser DKI des Kolbenmantels ist im wesentlichen konstant, wodurch der Mantel ein im wesentlichen zylindrisches oder zylinderartiges Volumen einschließt oder umfaßt. Der Innendurchmesser DKI beträgt von 100 mm bis 150 mm, bevorzugt von 120 mm bis 140 mm, besonders bevorzugt von 129 mm bis 133 mm.

In einer Ausführungsform schließt sich dem genannten oberen Kegelstumpf, welcher insbesondere einem zweiten Abschnitt des Kolbens entspricht, oberhalb ein erster Abschnitt, vorzugsweise ein oberer Kantenbereich der Außenseite des Mantels, an, der mit einem Außendurchmesser DK1 über eine Länge K1 im wesentlichen parallel zur Achse des Kolbens verläuft. D.h. der senkrechte Abstand jedes Punkts der Außenseite des Mantels zur Achse ist in dem genannten ersten Bereich im wesentlichen konstant. Die Länge K1 beträgt von 0,1 mm bis 10 mm, bevorzugt von 0,5 mm bis 5 mm, besonders bevorzugt von 1 mm bis 2 mm. Vorzugsweise entspricht der Außendurchmesser DK1 des ersten Abschnitts dem Durchmesser der Oberseite des Kolbens.

In dem sich unterhalb des oberen Kantenbereichs anschließenden zweiten Abschnitt, welcher dem oberen Kegelstumpf entspricht, nimmt der Durchmesser DK2 der Außenseite des Mantels, vorzugsweise kontinuierlich, über eine Höhe K2 auf einen minimalen Wert, insbesondere den Durchmesser der Einschnürung, ab, wobei die Länge K2 von 30 mm bis 100 mm, bevorzugt von 55 mm bis 70 mm, besonders bevorzugt von 60 mm bis 63 mm beträgt.

Wie bereits ausgeführt, schließt sich unterhalb des zweiten Bereichs ein dritter Bereich an, welcher dem unteren Kegelstumpf entspricht, in dem der Durchmesser DK3 der Außenseite des Mantels über eine Strecke K3, vorzugsweise kontinuierlich, bis auf einen Wert zunimmt, welcher vorzugsweise im wesentlichen dem Wert DK1 entspricht, wobei auch die Länge K3 im wesentlichen der Länge K2 entspricht.

Weiterhin schießt sich dem dritten Abschnitt des Kolbens unterhalb ein vierter Abschnitt der Außenseite des Mantels an, welcher mit einem Außendurchmesser DK4 über eine Länge K4 im wesentlichen parallel zur Achse des Kolbens verläuft. Der Außendurchmesser DK4 und die Höhe K4 des vierten Abschnitts entsprechen im wesentlichen dem Durchmesser DK1 und der Höhe K1 des ersten Abschnitts.

Außerdem schließt sich dem vierten Abschnitt der Außenseite ein fünfter Abschnitt der Höhe K5 an, welcher als eine umlaufende Vertiefung im Mantel mit einem Außendurchmesser K5 ausgebildet ist. Der Außendurchmesser DK5 beträgt von 132 mm bis 180 mm oder bevorzugt von 152 mm bis 158 mm und die Höhe K5 von 1 mm bis 10 mm oder bevorzugt von 3 mm bis 7 mm.

Ferner schließt sich dem fünften Abschnitt ein sechster Abschnitt der Außenseite des Mantels an, welcher mit einem Außendurchmesser DK6 über eine Länge K6 im wesentlichen parallel zur Achse des Kolbens verläuft, wobei der Außendurchmesser DK6 im wesentlichen dem Durchmesser DK1 entspricht, während die Länge K6 von 5 mm bis 30 mm oder besonders bevorzugt von 18 mm bis 22 mm beträgt. Dabei weist insbesondere die untere Kante des sechsten Abschnitts eine Fase auf, welche über eine Länge K61 von 0,5 mm bis 5 mm oder bevorzugt von 1 mm bis 2 mm durch einen Winkel Kβ1 von 5° bis 25° oder bevorzugt von 12° bis 18° gebildet wird.

Weiterhin schließt sich dem sechsten Abschnitt ein siebter Abschnitt der Höhe K7 an, welcher einen gegenüber dem sechsten Abschnitt reduzierten Durchmesser DK7 besitzt. Die Länge K7 beträgt von 0,5 mm bis 10 mm, bevorzugt von 3 mm bis 7 mm und der Durchmesser DK7 von 140 mm bis 160 mm oder bevorzugt von 149 mm bis 153 mm. Dabei verläuft ein oberer Abschnitt des siebten Bereichs, der an dem sechsten Bereich angrenzt, über eine Höhe K71 im wesentlichen parallel zur Achse des Kolbens, während ein unterer Abschnitt, der die untere Kante umfasst, über eine Höhe H72 gefast ist. Die Fase ist gebildet über eine, vorzugsweise beidseitige Fasenbreite K72 von 1 mm bis 5 mm oder bevorzugt von 2 mm bis 3 mm und durch einen Winkel Kβ2 von 40° bis 50° oder bevorzugt von 42° bis 48°. Zudem sind in der Unterseite des Mantels eine Mehrzahl an Aussparungen eingebracht, welche sich jeweils senkrecht zur Achse von innen nach außen erstrecken. Benachbarte Aussparungen sind hierbei zueinander jeweils derart angeordnet, so daß sie einen im wesentlichen konstanten Winkel zueinander einschließen.

Darüber hinaus ist in der Innenseite des Mantels eine umlaufende Ausnehmung, welche in ihrem Querschnitt der Form eines vorzugsweise im wesentlichen rechtwinkligen Dreiecks entspricht, eingebracht. Die Ausnehmung besitzt dabei einen Außendurchmesser DK28 von 140 mm bis 180 mm oder bevorzugt von 144 mm bis 148 mm. In der Ausnehmung selbst oder dem Mantel ist eine Mehrzahl von Öffnungen eingebracht, so daß das innere Volumen des Kolbens mit dem Außenbereich des Kolbens verbunden ist. Die benachbarten Öffnungen sind dabei zueinander jeweils derart angeordnet, so daß sie einen im wesentlichen konstanten Winkel zueinander einschließen. Die Öffnungen, welche identisch oder zumindest gleichartig sind, verlaufen derart, daß sie oder die Achse der Öffnungen zumindest abschnittsweise geneigt zur Achse des Kolbens verlaufen.

In einer bevorzugten Ausführungsform sind die Deckplatte und der Mantel einteilig ausgebildet. In einer alternativen Ausführungsform kann der Kolben auch modular aufgebaut und zusammengefügt sein.

Entsprechend der Fertigungs- und Materialmöglichkeiten, insbesondere hinsichtlich der möglichen Wandstärken oder einer dadurch herzustellenden möglichst geringen Spaltbreite zwischen dem Kolben und dem Zwischenteil haben sich für den Mantel und/oder die Deckplatte des Kolbens Materialien oder Legierungen erwiesen, welche A1, Si, Mg, Mn, Fe, Cu, Cr, Zn, Ti und/oder Zr oder eine Kombination von zumindest zwei der genannten Materialien umfassen. Als besonders vorteilhaft haben sich dabei Aluminium oder Aluminiumlegierungen erwiesen.

Insbesondere hinsichtlich einer Verformung durch die Druckbeaufschlagung besitzen die bevorzugt verwendeten Materialien oder Legierungen ein Elastizitätsmodul von etwa 50 GPa bis etwa 220 GPa (90GPa für Aluminium, bis 220 für Stahl), bevorzugt von etwa 63 GPa bis etwa 78 GPa, besonders bevorzugt von 68 GPa bis 73 GPa.

Um beispielsweise die Gefahr einer mechanischem Beschädigung des Kolbens oder seiner Oberfläche zu verringern, besitzen die geeigneten Materialien oder Legierungen eine Vickers-Härte von etwa 400 bis etwa 1000, bevorzugt von etwa 400 bis etwa 500, besonders bevorzugt von etwa 450. Ferner weisen sie ein Dichte von etwa 2 g/cm^3 bis etwa 8 g/cm^3, bevorzugt von 2,5 g/cm^3 bis 3 g/cm^3 oder besonders bevorzugt von etwa 2,7 g/cm^3 auf Alternativ können auch Stahl oder Keramik verwendet werden.

Das Zwischenteil oder Führungsgehäuse kann einen beidseitig zumindest abschnittsweise geöffneten hohlen Körper umfassen, insbesondere zylinderartig oder zylindrisch ausgestaltet, welcher durch Grundfläche, Deckfläche, Mantel und eine durch den Mittelpunkt der Grundfläche und den Mittelpunkt der Deckfläche verlaufende Achse definiert ist, wobei die Öffnung in einer Bodenplatte insbesondere an ihrer Unterseite, über eine Höhe Z1 zumindest einen ersten Abschnitt mit einem Durchmesser DZ1 aufweist, die der Bodenplatte gegenüberliegende Öffnung des Hohlkörpers einen Durchmesser oder Innendurchmesser DZI aufweist und vorzugsweise durch die Innenseite des Mantels begrenzt ist, d.h. vollständig geöffnet ist, die Unterseite der Bodenplatte zumindest abschnittsweise mit einer senkrecht zur Achse angeordneten Ebene oder einen horizontalen Ebene einen spitzen Winkel Zα einschließt. Das Zwischenteil ist dadurch gekennzeichnet daß das Verhältnis DZI über DZ1 in einem Bereich von 0,7 bis 6,7, bevorzugt von 1 bis 3,6. In einer besonders bevorzugten Ausführungsform liegt das Verhältnis in einem Bereich von 1,6 bis 1,8.

Der Durchmesser DZI weist dabei einen Wert von 120 mm bis 200 mm, bevorzugt von 161 mm bis 181 mm, besonders bevorzugt von 161 mm bis 165 mm auf.

Der Durchmesser DZ1 beträgt 30 mm bis 180 mm, bevorzugt 50 mm bis 167 mm, besonders bevorzugt 90 mm bis 100 mm, während die Höhe Z1 von 0,1 mm bis 10 mm, bevorzugt von 0,5 mm bis 5 mm, besonders bevorzugt von 1 mm bis 3 mm beträgt.

In einer bevorzugten Ausführungsform sind bzw. ist die Grundfläche und/oder die Deckfläche des hohlen Körpers oder des Zwischenteils im wesentlichen kreisförmig ausgebildet. Die Wandstärke DZW des Zwischenteils beträgt 2 mm bis 30 mm, bevorzugt 5 mm bis 20 mm, besonders bevorzugt 10 mm bis 16 mm. Das Zwischenteil besitzt dabei eine Gesamthöhe ZGES 120 mm bis 200 mm oder bevorzugt von 160 bis 180 mm

Das Verhältnis des Außendurchmessers DZA des hohlen Körpers zu seinem Innendurchmesser DZI liegt dabei in einem Bereich von 1 bis 2,1, bevorzugt von 1 bis 1,3, besonders bevorzugt von 1,1 bis 1,2. Dabei liegt der Außendurchmesser DZA in einem Bereich von 100 mm bis 250 mm, bevorzugt von 185 mm bis 205 mm, besonders bevorzugt von 185 mm bis 195 mm.

Der genannte eingeschlossene Winkel Zα beträgt 0,0001° bis etwa 0,1°, vorzugsweise 0,001° bis 0,035°, besonders bevorzugt 0,007° bis 0,009°. Dieser liegt in einem inneren ersten Abschnitt in der Grundfläche des Zwischenteils. Den genannten inneren ersten Abschnitt mit dem Durchmesser DZ31, in dem die Unterseite der Bodenplatte eine Neigung aufweist, schließt sich dabei noch ein zweiter Abschnitt mit einem Durchmesser DZ32 an, dessen Unterseite hier im wesentlichen parallel zur Grundfläche oder der Horizontalen verläuft und im Bereich der äußeren unteren Kante in die nachstehend beschriebene Fase der äußeren unteren Kante übergeht. Das Verhältnis DZ31 zu DZ0 oder DZ32 beträgt 0,9 bis 0,99 oder bevorzugt etwa 0,97 bis 0,99

Die Unterseite der Bodenplatte weist einen gegenüber der Außenseite des hohlen Körpers reduzierten Durchmesser DZ0 auf. Der Durchmesser DZ0 der Unterseite der Bodenplatte steht dabei zu dem Außendurchmesser DZA des hohlen Körpers in einem Verhältnis von 0,4 bis etwa 0,99, bevorzugt von 0,7 bis etwa 0,99, besonders bevorzugt von 0,95 bis etwa 0,99. Der Durchmesser DZ0 der Unterseite der Bodenplatte liegt hierbei in einem Bereich von 95 mm bis 245 mm, bevorzugt von 150 mm bis 203 mm, besonders bevorzugt von 186 mm bis 190 mm.

Vorteilhafterweise ist die äußere untere Kante des Hohlkörpers mit einer vertikalen Fasenbreite von 0,1 mm bis 10, bevorzugt von 0,5 mm bis 5 mm, besonders bevorzugt von 1 mm bis 3 mm gefast. Die horizontale Fasenbreite ergibt sich aus der durch zwei geteilten Differenz von DA und DZ0, wodurch letztendlich auch der Fasenwinkel festgelegt ist. Als Alternative kann die äußere untere Kante des Hohlkörpers auch verrundet sein.

Die genannte Öffnung in der Bodenplatte kann dabei nur aus dem genannte ersten Abschnitt bestehen oder auch, wie nachfolgend ausgeführt, abschnittsweise, d.h. aus Abschnitten unterschiedlichen Durchmessers aufgebaut sein, wobei sich der Durchmesser in diskreten Sprüngen, d.h. stufenartig, oder auch kontinuierlich ändern kann. Insbesondere vergrößert sich der Durchmesser der Öffnung in der Bodenplatte, ausgehend von ihrer Unterseite in Richtung ihrer Oberseite, vorzugsweise über zumindest eine Stufe zumindest abschnittsweise. Vorzugsweise ist die Öffnung in der Bodenplatte dabei im wesentlichen kreisförmig ausgebildet.

Ist die Öffnung abschnittsweise oder stufenartig aufgebaut, so weist diese erfindungsgemäß über eine Höhe Z2 einen zweiten Abschnitt mit einem Durchmesser DZ2 aufweist, der kleiner als der Durchmesser DZ1 des ersten Abschnitts ist und vorzugsweise oberhalb des ersten Bereichs angrenzt. Der Durchmesser DZ2 liegt in einem Bereich von 35 mm bis 175 mm, bevorzugt von 55 mm bis 165 mm, besonders bevorzugt von 95 mm bis 99 mm und Z2 beträgt von 0,5 mm bis 15 mm, bevorzugt von 1 mm bis 10 mm, besonders bevorzugt von 4 mm bis 8 mm.

Die Öffnung kann weiterhin einen dritten Abschnitt aufweisen, welcher sich insbesondere oberhalb des zweiten Abschnitts anschließt und über eine Höhe Z3 einen Durchmesser DZ3 von 100 mm bis 175 mm, bevorzugt von 120 mm bis 170 mm, besonders bevorzugt von 144 mm bis 150 mm hat. Dabei beträgt das Verhältnis DZ3 zu DZ2 unter 5, bevorzugt unter 3,1, besonders bevorzugt zwischen 1,45 und 1,58 und Z3 beträgt von 0,5 mm bis 12 mm, bevorzugt von 1 mm bis 8 mm, besonders bevorzugt von 3 mm bis 5 mm.

In einer bevorzugten Ausführungsform ist die obere Kante des dritten Abschnitts gefast, wobei die Fase eine vorzugsweise beidseitige Fasenbreite von 0,1 mm bis 3 mm oder bevorzugt von 0,5 mm bis 2 mm und einen Fasenwinkel von 40° bis 50°, bevorzugt von etwa 45° aufweist. Der dritte Abschnitt entspricht dabei vorzugsweise dem letzten Abschnitt der Öffnung in der Bodenplatte, wobei die Oberseite der Bodenplatte im wesentlichen senkrecht zur Achse des Zwischenteils angeordnet oder ausgerichtet ist.

Weiterhin schließt sich oberhalb der Bodenplatte, vorzugsweise oberhalb des dritten Abschnitts der Öffnung, zumindest eine bzw. eine in der Innenseite des Mantels eingebrachte umlaufende Ausnehmung oder ein Ringspalt an. Die Ausnehmung besitzt dabei eine Höhe Z15 von 1 mm bis 8 mm oder bevorzugt von 2 mm bis 4 mm und der Außendurchmesser DZ15 beträgt von 161 mm bis 183 mm oder bevorzugt 160 mm bis 165 mm. In einer bevorzugten Ausführungsform sind die Bodenplatte und der Mantel einteilig ausgebildet. In einer alternativen Ausführungsform kann das Zwischenteil auch modular aufgebaut und zusammengefügt sein.

Insbesondere zur Ausbildung einer horizontalen Lagerung ist in dem Mantel zumindest ein Loch angeordnet, welches sich von der Innenseite des Mantels zur Außenseite des Mantels erstreckt. Bei der Verwendung einer Vielzahl von Löchern, sind die benachbarten Löcher zueinander jeweils derart angeordnet, daß sie einen im wesentlichen konstanten Winkel einschließen. Die Löcher haben einen Durchmesser von 0,1 mm bis 10 mm, bevorzugt von 1 mm bis 7 mm, besonders bevorzugt von 3 mm bis 5 mm. Die Lage der Löcher in dem Mantel oder deren Höhe Z4 ist auch festgelegt durch die Anordnung der Aussparungen in der Außenseite des Kolbens. Dabei liegen die Löcher erfindungsgemäß auf einer Höhe Z4 von etwa 30 bis etwa 50 mm oder bevorzugt auf einer Höhe Z4 von etwa 38 mm zur Grundfläche des Zwischenteils.

Um das Kraftrauschen, welches im nachfolgend Teil der Ausführungsbeispiele diskutiert ist, zu verringern, weist die obere innere Kante der Innenseite des Mantels eine Fase auf. Diese besitzt erfindungsgemäß eine vertikale Fasenbreite von 0,5 mm bis 3 mm, bevorzugt von 1 mm bis 2 mm und einen Fasenwinkel von 5° bis 30°, bevorzugt von etwa 15°.

Entsprechend der Fertigungs- und Materialmöglichkeiten, insbesondere hinsichtlich der möglichen Wandstärken oder einer dadurch herzustellenden möglichst geringen Spaltbreite zwischen dem Kolben und dem Zwischenteil haben sich für den Mantel und/oder die Bodenplatte des Zwischenlagers Materialien oder Legierungen erwiesen, welche Al, Si, Mg, Mn, Fe, Cu, Cr, Zn, Ti und/oder Zr oder eine Kombination von zumindest zwei der genannten Materialien umfassen. Als besonders vorteilhaft haben sich dabei Aluminium oder Aluminiumlegierungen erwiesen.

Insbesondere hinsichtlich einer Verformung durch die Druckbeaufschlagung besitzen die bevorzugt verwendeten Materialien oder Legierungen ein Elastizitätsmodul von etwa 50 GPa bis etwa 220 GPa, bevorzugt von etwa 63 GPa bis etwa 78 GPa, besonders bevorzugt von 68 GPa bis 73 GPa.

Um beispielsweise eine Beschädigung des Zwischenlagers oder seiner Oberfläche zu verringern, besitzen die geeigneten Materialien oder Legierungen eine Vickers-Härte von etwa 400 bis etwa 1000, bevorzugt von etwa 400 bis etwa 500, besonders bevorzugt von etwa 450. Ferner weisen sie ein Dichte von etwa 2 g/cm^3 bis etwa 8 g/cm^3, bevorzugt von 2,5 g/cm^3 bis 3 g/cm^3 oder besonders bevorzugt von etwa 2,7 g/cm^3 auf.

Die Basisplatte kann zumindest eine eingebrachte Öffnung umfassen. Die Basisplatte kann dadurch gekennzeichnet sein, daß der Querschnitt der Öffnung an einer Oberseite der Basisplatte größer als der oder gleich dem Querschnitt der Öffnung an einer Unterseite der Basisplatte ist.

Dabei ist der Querschnitt der Öffnung, vorzugsweise sowohl an der Oberseite als auch an der Unterseite der Basisplatte, im wesentlichen kreisförmig ausgebildet. Der Öffnungsdurchmesser DB11 an der Oberseite steht zum Öffnungsdurchmesser DB14 an der Unterseite in einem Verhältnis von 0,1 bis 1, bevorzugt von 0,25 bis 0,8, besonders bevorzugt von 0,4 bis 0,5.

Dabei weist die Öffnung an der Unterseite einen Durchmesser DB14 von 50 mm bis 300 mm, bevorzugt von 100 mm bis 200 mm, besonders bevorzugt von 142 mm bis 145 mm auf, während die Öffnung an der Oberseite einen Durchmesser DB11 von 20 mm bis 250 mm, bevorzugt von 50 bis 80, besonders bevorzugt von 62 mm bis 66 mm aufweist.

In einer bevorzugten Ausführungsform besitzt die Öffnung zumindest abschnittsweise eine Form, welche im wesentlichen der Art eines Kegelstumpfes oder einem Kegelstumpf, der im wesentlichen durch Grundfläche, Deckfläche, Kegelmantel und seine Achse definiert ist, entspricht. Der Durchmesser DB7 der Deckfläche zum Durchmesser DB5 der Grundfläche steht erfindungsgemäß in einem Verhältnis von 0,1 bis 1, bevorzugt von 0,25 bis 0,7, besonders bevorzugt von 0,4 bis 0,5. Hierbei weist die Deckfläche einen Durchmesser DB7 von 15 mm bis 240 mm, bevorzugt von 45 bis 75, besonders bevorzugt von 58 mm bis 62 mm auf, während die Grundfläche einen Durchmesser von 40 mm bis 290 mm bevorzugt von 110 mm bis 190 mm, besonders bevorzugt von 130 mm bis 134 mm aufweist.

Der Deckfläche des Kegelstumpfes schließt sich ein, vorzugsweise kreisförmiger, oberer zylinderartiger, insbesondere zylindrischer Bereich an, wobei der Durchmesser DB10 oder der Querschnitt des oberen Bereichs im wesentlichen oder gleich dem Durchmesser DB7 der Deckfläche des Kegelstumpfes entspricht bzw. ist. Der obere Bereich hat eine Höhe B10 von 2 mm bis 10 mm, bevorzugt von 3,5 mm bis 5,5 mm, besonders bevorzugt von 4,2 mm bis 4,4 mm.

Die obere Kante der Öffnung oder vorzugsweise die obere Kante des oberen Bereichs weist eine Fase auf. Die Fase ist vorliegend über eine Fasenbreite von 0,5 mm bis 5 mm, bevorzugt von 1 mm bis 3 mm, besonders bevorzugt von etwa 2 mm bestimmt und schließt einen Winkel von 20° bis 70°, bevorzugt von 40° bis 50°, besonders bevorzugt von 44° bis 46° mit der Achse des Zwischenteils oder des genannten Kegelstumpfes ein.

Auf der anderen Seite schließt sich der Grundfläche des Kegelstumpfes ein, vorzugsweise kreisförmiger, unterer, insbesondere kegelstumpfartiger, Bereich an, welcher einen gegenüber der Grundfläche des zentralen Kegelstumpfes größeren, vorzugsweise mittleren, Durchmesser besitzt. Dieser untere Bereich ist dabei durch eine kreisförmige Ausnehmung in der Unterseite der Bodenplatte erzeugt oder eingebracht und im wesentlichen konzentrisch zur Öffnung angeordnet. Der untere Bereich ist dabei im wesentlichen durch seine Grundfläche und Deckfläche definiert. Der untere Bereich hat dabei einen oberen Durchmesser DB13 von 40 mm bis 290 mm, bevorzugt von 90 mm bis 190 mm, besonders bevorzugt von etwa 145 mm bis 155 mm hat.

Der untere Durchmesser DB14 des unteren Bereichs ist gegenüber dem Durchmesser DB13 vergrößert und entspricht vorzugsweise dem Durchmesser der Öffnung an der Unterseite der Basisplatte. Eine obere Kante des unteren Bereichs ist verrundet, wobei die verrundete obere Kante einen Verrundungsradius von 0,1 mm bis 2 mm, bevorzugt von 0,5 mm bis 1,1 mm, besonders bevorzugt von 0,7 mm bis 0,9 mm aufweist. Vorzugsweise ist auch die untere Kante des unteren Bereichs verrundet, wobei die verrundete untere Kante einen Verrundungsradius von 0,01 mm bis 1 mm, bevorzugt von 0,05 mm bis 0,5 mm, besonders bevorzugt von 0,1 mm bis 0,3 mm besitzt. Der untere Bereich hat hierbei eine Höhe B12 von 0,5 mm bis 10 mm, bevorzugt von 1 mm bis 5 mm, besonders bevorzugt von 3 mm bis 3,5 mm.

Die Basisplatte besitzt eine Höhe B31 von 10 mm bis 40 mm, bevorzugt von 18 mm bis 28 mm, besonders bevorzugt von 22 mm bis 26 mm, eine Länge B32 von 100 mm bis 500 mm, bevorzugt von 250 mm bis 350 mm, besonders bevorzugt von 280 mm bis 320 mm und/oder eine Breite B33 von 50 mm bis 400 mm, bevorzugt von 150 mm bis 250 mm, besonders bevorzugt von 180 mm bis 220 mm.

Die Basisplatte ist dabei neben der eingebrachten Öffnung zusätzlich zumindest abschnittsweise hohl ausgebildet. Um den erforderlichen Versorgungsdruck in dem Kolben und dem Zwischenteil entsprechend bereitzustellen, weist die Basisplatte dazu einen vorzugsweise kreisförmigen Kanal auf, dessen einer Zugang in die Öffnung, vorzugsweise in den Kegelmantel der Öffnung, mündet. Die Achse des Kanals ist dabei im wesentlichen parallel zur horizontalen Achse der Basisplatte ausgerichtet und besitzt einen Durchmesser DB3 von 5 mm bis 25 mm, bevorzugt von 10 mm bis 20 mm, besonders bevorzugt von 13 mm bis 17 mm.

In einer bevorzugten Ausführungsform ist die Basisplatte einteilig ausgebildet. In einer alternativen Ausführungsform kann die Basisplatte auch modular aufgebaut und entsprechend zusammengefügt sein.

Entsprechend der Fertigungs- und Materialmöglichkeiten haben sich für die Basisplatte Materialien oder Legierungen erwiesen, welche Fe, Cr und/oder C oder eine Kombination von zumindest zwei der genannten Materialien umfassen. Als besonders vorteilhaft haben sich dabei Stahl oder ein hoch Cr-legierter Stahl, vorzugsweise nach DIN-Norm X 42 Cr 13, erwiesen. Alternativ kann auch Aluminium wie der Kolben und das Zwischenteil verwendet werden, wobei dann die Dicke B31 vergrößert ist.

Insbesondere hinsichtlich einer Verformung durch die Durckbeaufschlagung oder die Gewichtskraft der auf ihr gelagerten Bauteile besitzen die bevorzugt verwendeten Materialien oder Legierungen ein Elastizitätsmodul von von etwa 150 GPa bis etwa 250 GPa oder bevorzugt von 180 GPa bis 220 GPa.

Um beispielsweise die einer mechanischen Beschädigung der Basisplatte oder ihrer Oberfläche zu verringern, besitzen die geeigneten Materialien oder Legierungen eine Rockwell-Härte HRC von etwa 75 bis etwa 105, bevorzugt von etwa 40 bis etwa 58, besonders bevorzugt von etwa 48.

Weiterhin umfaßt die vorliegende Erfindung ein Federsystem zur Schwingungsisolation und/oder Dämpfung, insbesondere ein vertikal und/oder horizontal wirksames Luftlager, welches eine Basisplatte mit den vorstehend beschriebenen Merkmalen, ein Zwischenteil mit den vorstehend beschriebenen Merkmalen und ein Kolben mit den vorstehend beschriebenen Merkmalen umfaßt.

Das Federsystem zeichnet sich durch eine Tragkraft von etwa 500 kg bis 2000 kg oder vorzugsweise von 500 kg bis 1500 kg und (besonders bevorzugt 600kg bis 1250kg) aus.

Das Federsystem besitzt dabei Eigenmoden in Abhängigkeit der Massenverteilung, die in der Größenordnung von 0.1Hz bis 10Hz, 0.2 bis 5Hz bzw. 0.5 bis 1.5Hz liegen.

Zudem besitzt das Federsystem ein reduziertes Kraftrauschen, welches in der Größenordnung von 0.1N bis 0.2N liegt. Dadurch ist das Rauschen gegenüber vergleichbaren Federsystemen des Standes der Technik um einen Faktor 0.8 bis 0.5 reduziert.

Zudem besitzt das Federsystem einen Luftverbrauch von etwa 90 N1/min bis etwa 120 N1/min (pro System - drei Isolatoren), bevorzugt von etwa 105 N1/min (Normliter/min). Dadurch ist der Luftverbrauch gegenüber vergleichbaren Federsystemen des Standes der Technik um 30% bis 20% reduziert.

Das Federsystem kann Teil eines Schwingungsisolationsmoduls, -systems oder einer - einrichtung sein, welches zumindest eins, vorzugsweise drei, der vorstehend beschriebenen Federsysteme, zumindest einen Kolben, zumindest ein Zwischenteil und/oder eine zumindest Basisplatte mit den jeweils vorstehend beschriebenen Merkmalen aufweist.

Ein Schwingungsisolationssystem umfaßt dabei eine Masse, die typischerweise ein optisches Linsensystem beinhaltet und insbesondere auf drei Isolatormodulen oder Federsystemen aufgestellt ist. Das Federsystem umfaßt vorzugsweise mindestens drei Luftlagerelemente, hier Kolben, Zwischenlager und Basisplatte. Weiterhin umfaßt das Schwingungsisolationssystem mindestens zwei wegmessende Abstands- oder Positionssensoren, wobei ein erster Sensor eine vertikale Bewegung und ein zweiter Sensor eine horizontale Bewegung feststellen kann. Weiterhin umfaßt das Schwingungsisolationssystem eine Druckluftversorgung mit einem zur Verfügung stehenden Volumenstrom von mindestens 150 Nl/min (Normliter/min) für das gesamte System, mindestens ein elektropneumatisches Servoventil, welches den Druck innerhalb des Isolators modulieren kann, mit dem Ziel, die Isolatorausfederung auf einen Sollwert zu regeln und mindestens eine Volumenstromdrossel zwischen dem Servoregelventil und dem Isolatorluftvolumen. Ferner beinhaltet das Schwingungsisolationssystem mindestens einen elektrodynamischen oder elektromagnetischen Linearaktor zur Erzeugung von Relativkräften zwischen Boden und gelagerter bzw. isolierter Masse, eine elektronische, vorzugsweise analoge und/oder digitale, Regelungseinheit mit entsprechenden Regel- und/oder Steueralgorithmen zum Auslesen und Weiterverarbeiten der Informationen aus den Abstandssensoren. Die ausgelesenen und weiterverarbeitenden Informationen werden dabei in Ausgängen zu den Servoventilen zur Modulation des Lagerinnendruckes und/oder in Ausgängen zu den Linearaktoren, welche insbesondere in sechs orthogonalen Freiheitsgraden wirksam sind, benutzt.

Es können auch vorzugsweise zusätzlich zu den genannten Positionssensoren spezielle Inertialsensoren, wie zum Beispiel sogenannte seismische Geschwindigkeitssensoren oder Seismometer oder auch Beschleunigungsaufnehmer, eingesetzt werden. Die genannten Sensoren und/oder auch die genannten Linearaktoren können dabei orthogonal oder auch nicht orthogonal zueinander angeordnet sein. Über entsprechende Algorithmen können dann die erforderlichen Komponenten ermittelt, insbesondere berechnet, werden.

Es kann anstelle des vorstehend genannten Ventils auch ein Servodruckregelventil eingesetzt werden, mit einem Servoventil zur Regelung des Volumenstroms oder mit einem einfachen 2/2-Wege-Ventil, welches mittels elektrischer oder elektronischer Beschaltung pulsenweitenmoduliert ein quasi-proportionales Ausgangssignal erzeugen kann

Es kann auch ein zusätzliches Puffervolumen zwischen Servoventil und Isolatorvolumen integriert sein, wobei das Volumen größer als 0,02 Liter, aber weniger als 100 Liter betragen soll. Dabei können mindestens 2 Volumenstromdrosseln für jeden Isolator eingesetzt werden. Eine Drossel wird dabei nach dem Servoventil und vor dem Puffervolumen und eine weitere Drossel zwischen Puffervolumen und dem Isolatorvolumen eingesetzt.

Die genannten Volumenstromdrosseln bestehen dabei aus einem Material oder weisen eine Konstruktion auf, welche im wesentlichen laminare Strömungsverhältnisse bei allen Druckverhältnissen erlaubt und ein Kraftrauschen reduziert ist.

Die vorliegende Erfindung wird nachfolgend anhand von Ausführungsbeispielen im einzelnen beschrieben, wobei die Merkmale unterschiedlicher Ausführungsbeispiele miteinander kombinierbar sind. Hierzu wird auf die beigefügten Zeichnungen Bezug genommen. Dazu beziehen sich in den einzelnen Zeichnungen die gleichen Bezugszeichen auf die gleichen Teile.

### Figurenbeschreibung:

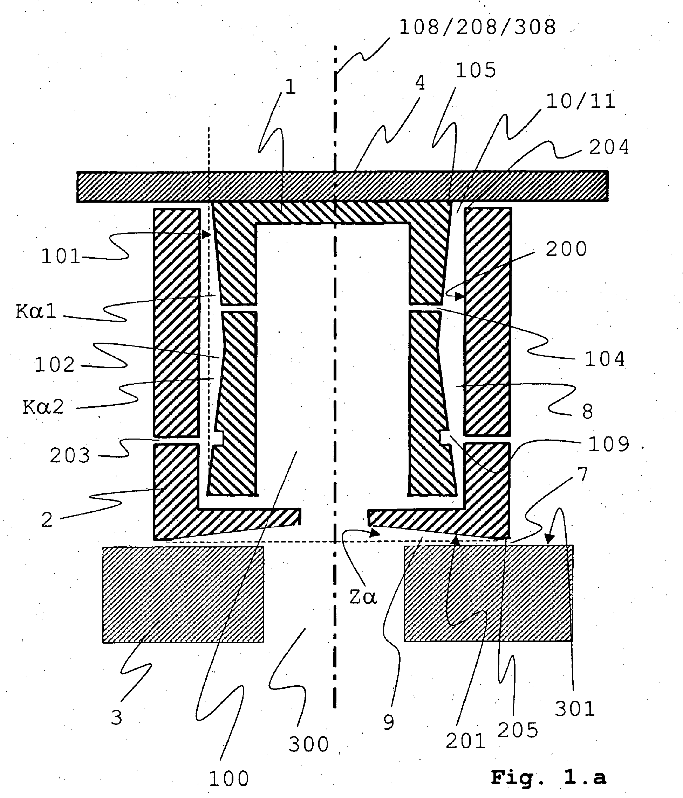

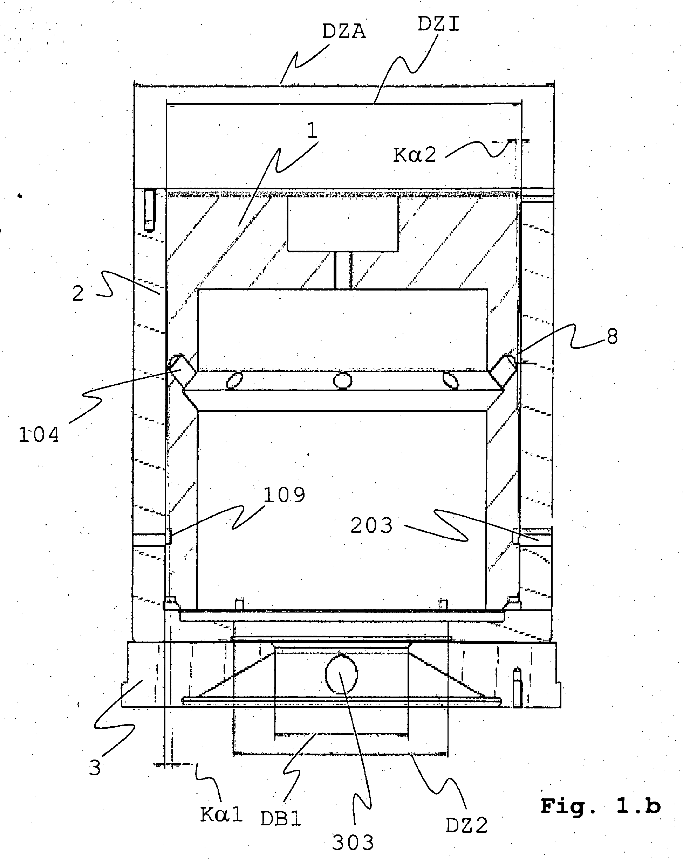

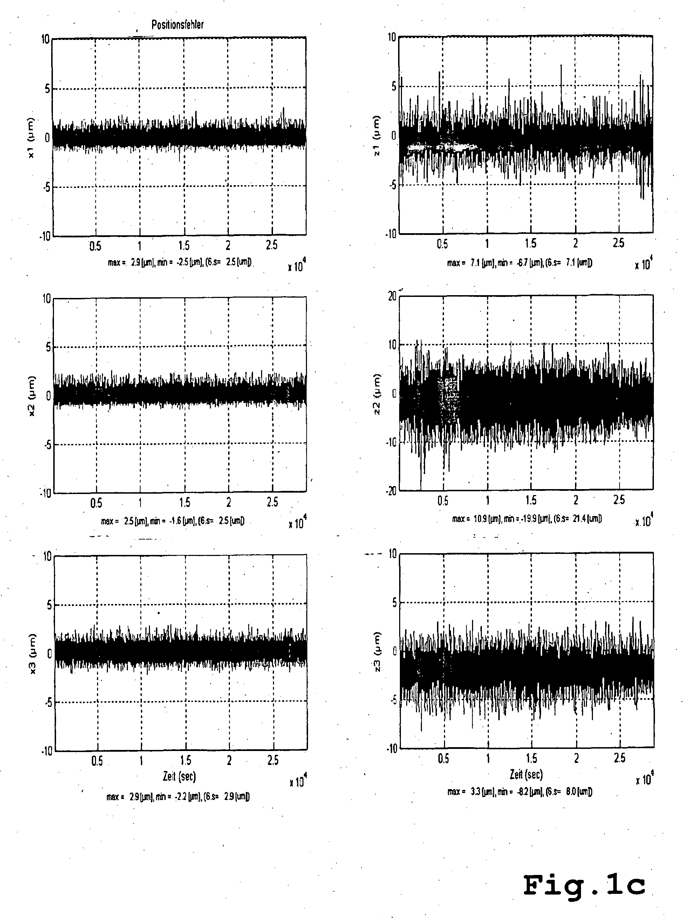

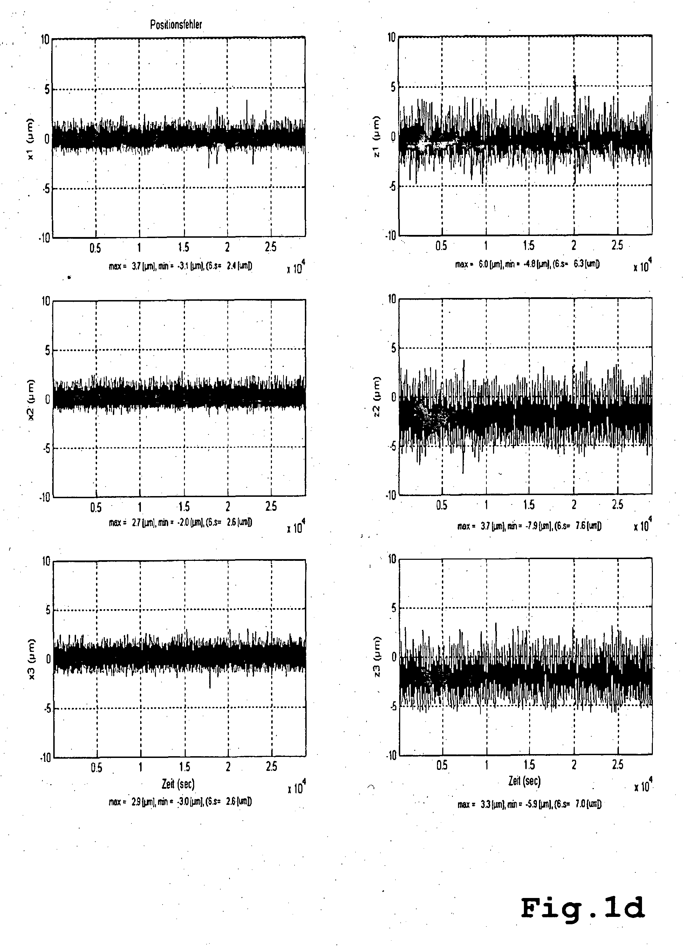

Fig. 1.a zeigt eine vereinfachte schematische Darstellung des erfindungsgemäßen Federsystems im Betriebszustand in einer Schnittdarstellung.
Fig. 1.b zeigt eine detaillierte schematische Darstellung des erfindungsgemäßen Federsystems im zusammengebauten Zustand in einer Schnittdarstellung.
Fig. 1.c zeigt das Ergebnis einer Untersuchung der Positionsstabilität eines Federsystems mit nicht abgestimmter Geometrie als Funktion der Zeit.
Fig. 1.d zeigt das Ergebnis einer Untersuchung der Positionsstabilität eines Federsystems mit einer erfindungsgemäßen Geometrie als Funktion der Zeit.
Fig. 2.a zeigt schematisch eine seitliche Außenansicht des Kolbens aus Fig. 1.b.

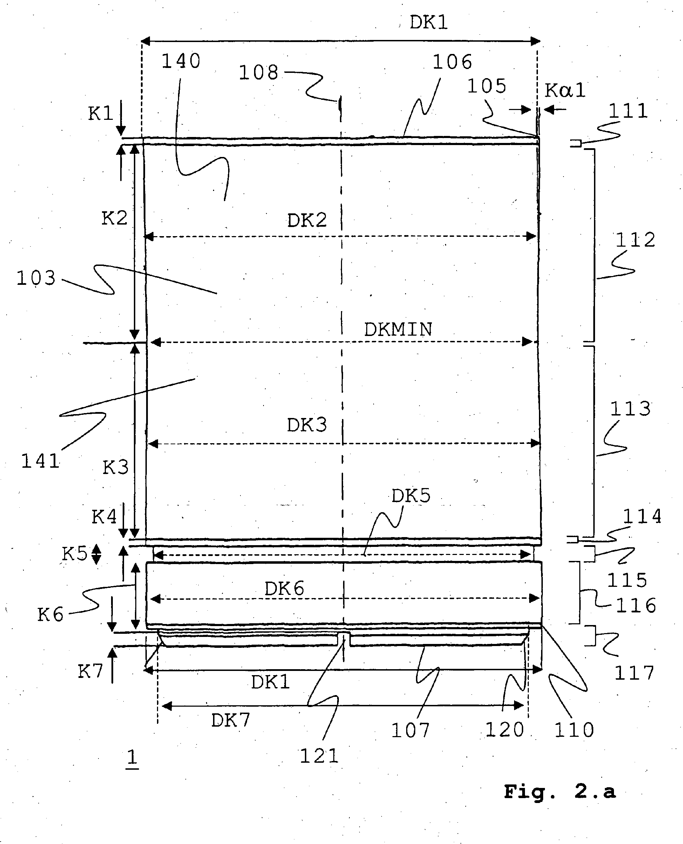

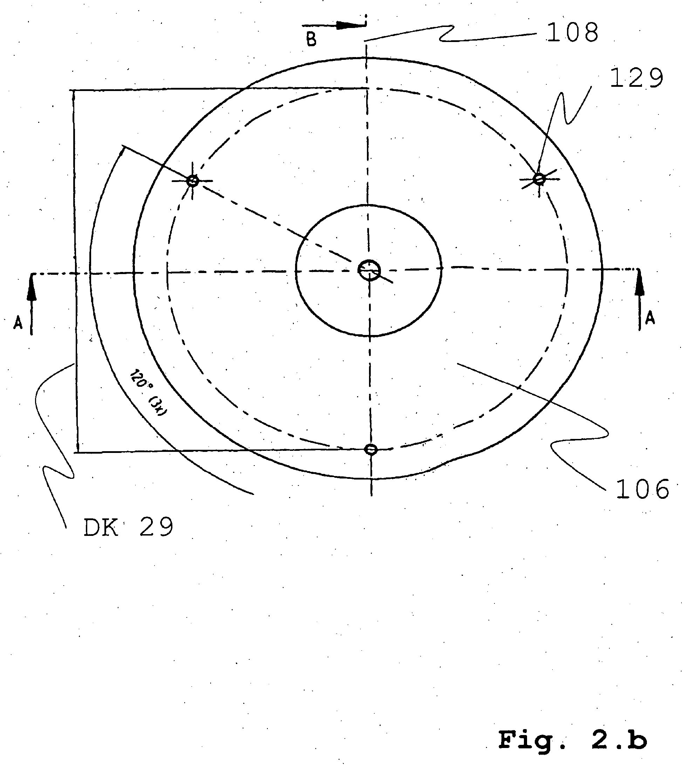

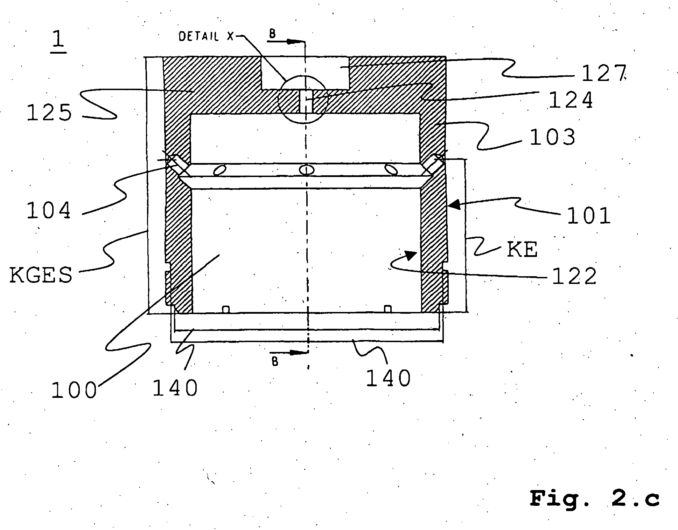

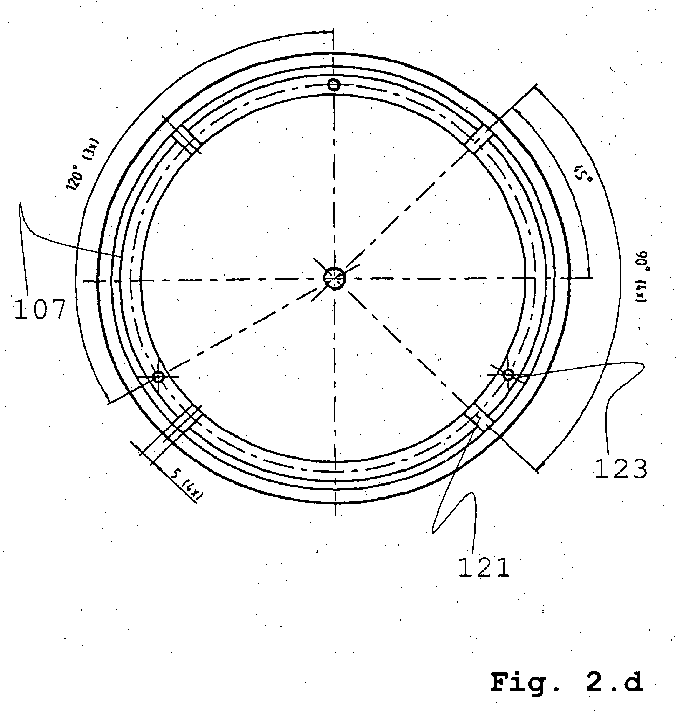

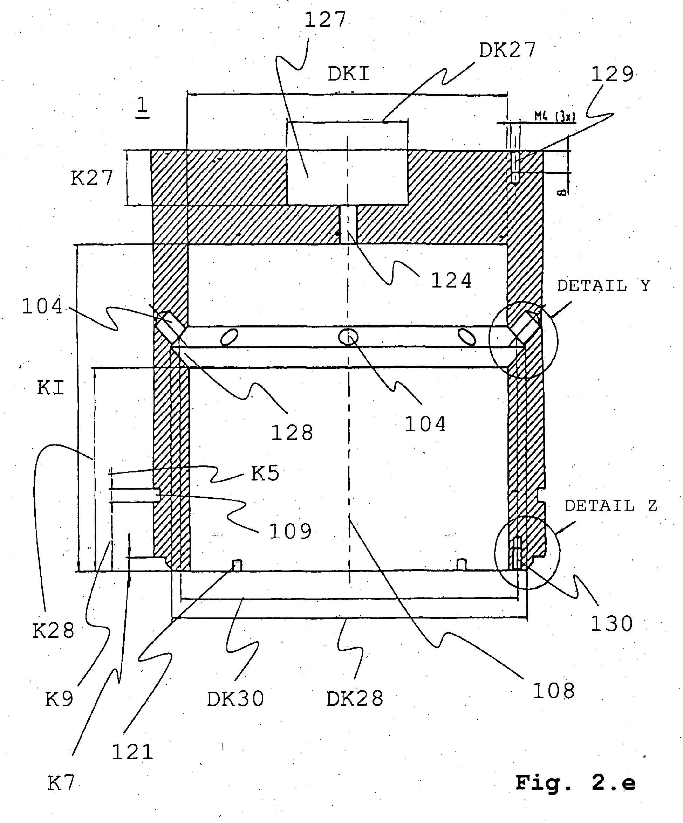

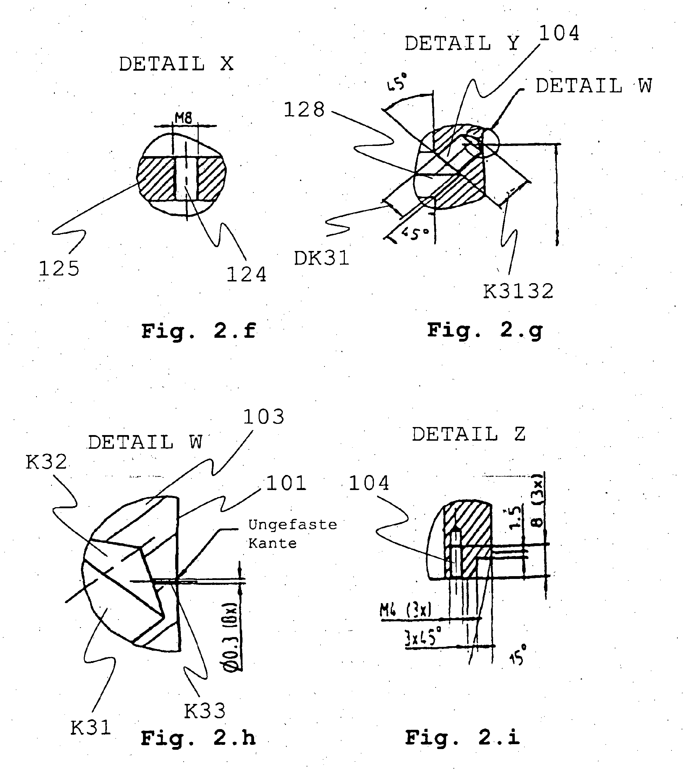

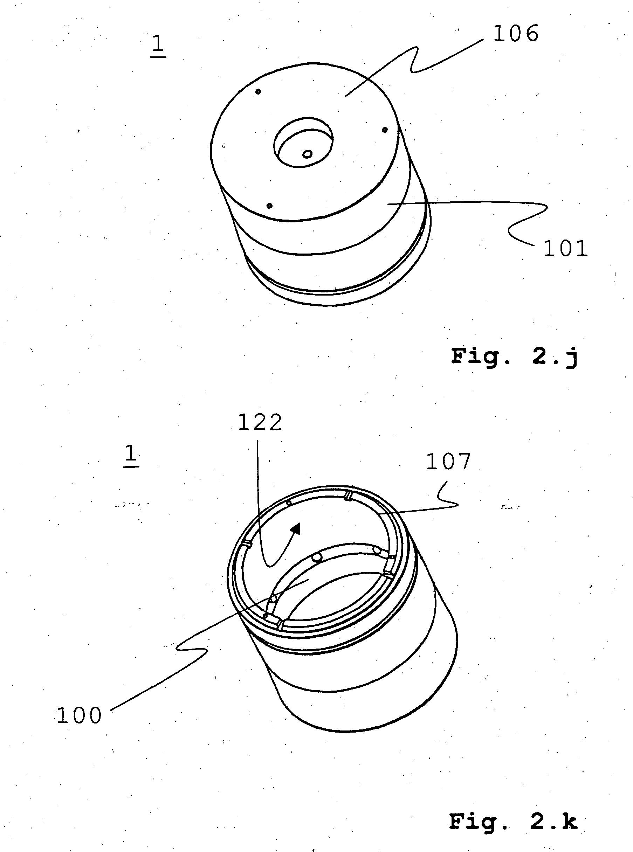

Fig. 2.b zeigt eine schematische Darstellung der Oberseite des Kolbens.
Fig. 2.c zeigt eine schematische Schnittdarstellung des Kolbens entlang der Achse A-A aus Fig. 2.d.
Fig. 2.d zeigt eine schematische Darstellung der Unterseite des Kolbens.
Fig. 2.e zeigt eine schematische Schnittdarstellung des Kolbens entlang der Achse B-B aus Fig. 2.c.
Fig. 2.f zeigt eine schematische Detailansicht des Ausschnitts X aus Figur 2.c.
Fig. 2.g zeigt eine schematische Detailansicht des Ausschnitts Y aus Figur 2.e.
Fig. 2.h zeigt eine schematische Detailansicht des Ausschnitts W aus Figur 2.g.
Fig. 2.i zeigt eine schematische Detailansicht des Ausschnitts Z aus Figur 2.a.
Fig. 2.j zeigt schematisch eine perspektivische Sicht auf die Oberseite des Kolbens.
Fig. 2.j zeigt eine perspektivische Sicht auf die Unterseite des Kolbens.

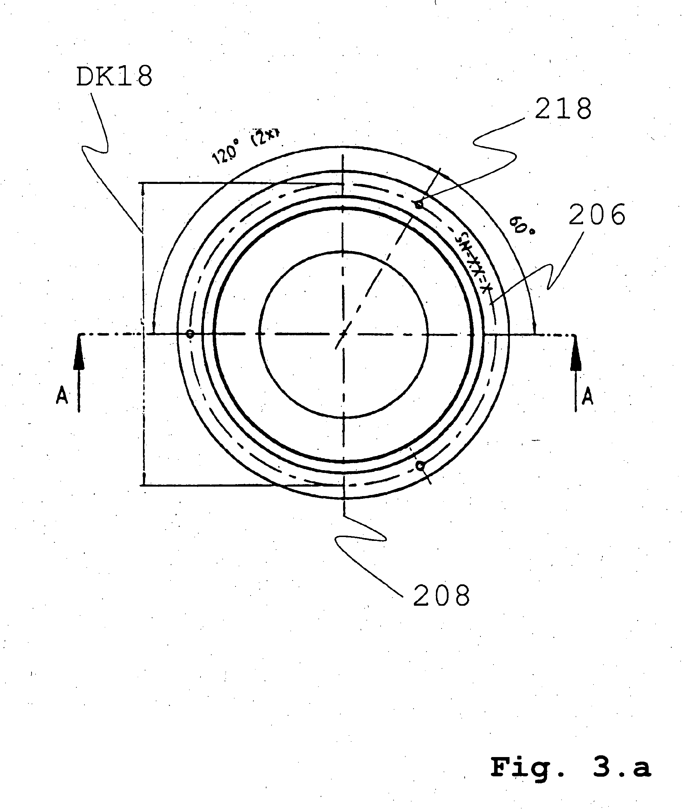

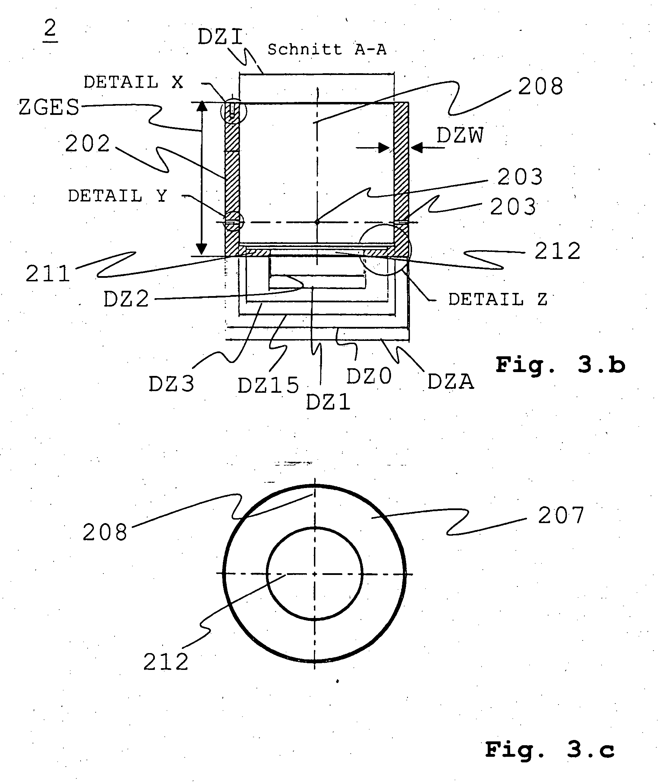

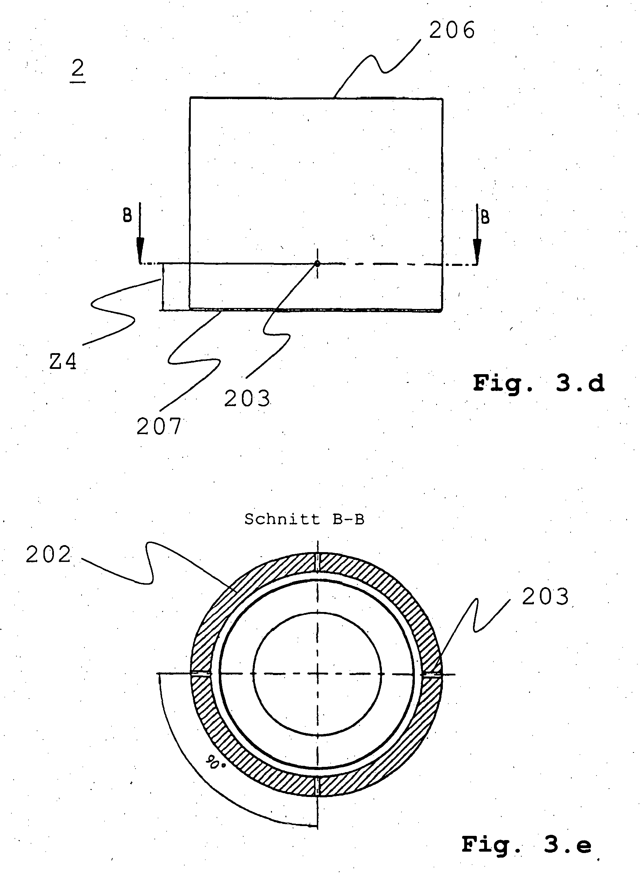

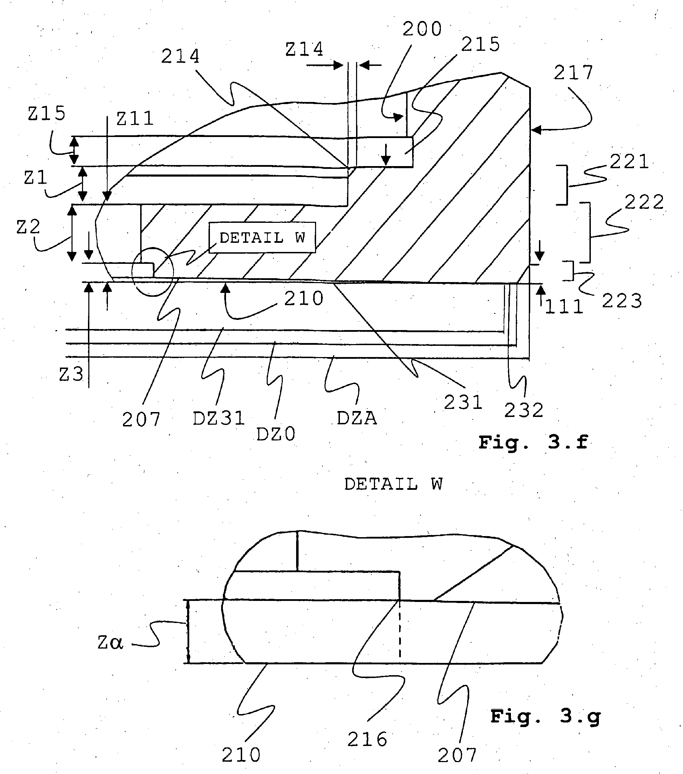

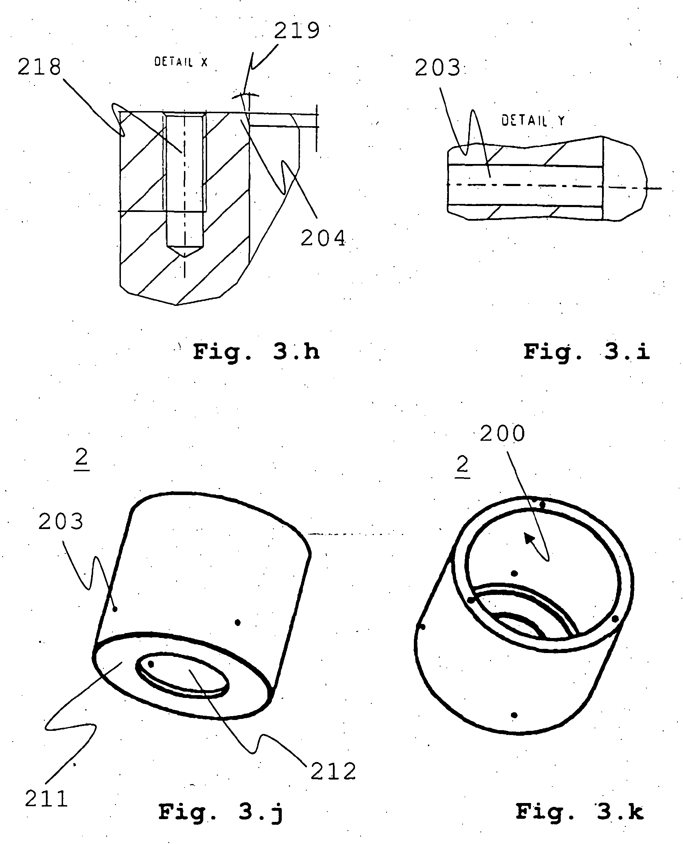

Fig. 3.a zeigt eine schematische Darstellung der Oberseite des Zwischenteils aus Fig. 1.b.
Fig. 3.b zeigt eine schematische Schnittdarstellung des Zwischenteils entlang der Achse A-A aus Fig. 3.c.
Fig. 3.c zeigt eine schematische Darstellung der Unterseite des Zwischenteils .
Fig. 3.d zeigt schematisch eine seitliche Außenansicht des Zwischenteils.
Fig. 3.e zeigt eine schematische Schnittdarstellung des Zwischenteils entlang der Achse B-B aus Fig. 3.b.
Fig. 3.f zeigt eine schematische Detailansicht des Ausschnitts Z aus Figur 3.b.
Fig. 3.g zeigt eine schematische Detailansicht des Ausschnitts W aus Figur 3.f.
Fig. 3.h zeigt eine schematische Detailansicht des Ausschnitts X aus Figur 3.b.
Fig. 3.i zeigt eine schematische Detailansicht des Ausschnitts Y aus Figur 3.b.
Fig. 3.j zeigt schematisch eine perspektivische Sicht auf die Unterseite des Zwischenteils.
Fig. 3.k zeigt schematisch eine perspektivische Sicht auf die Oberseite des Zwischenteils.

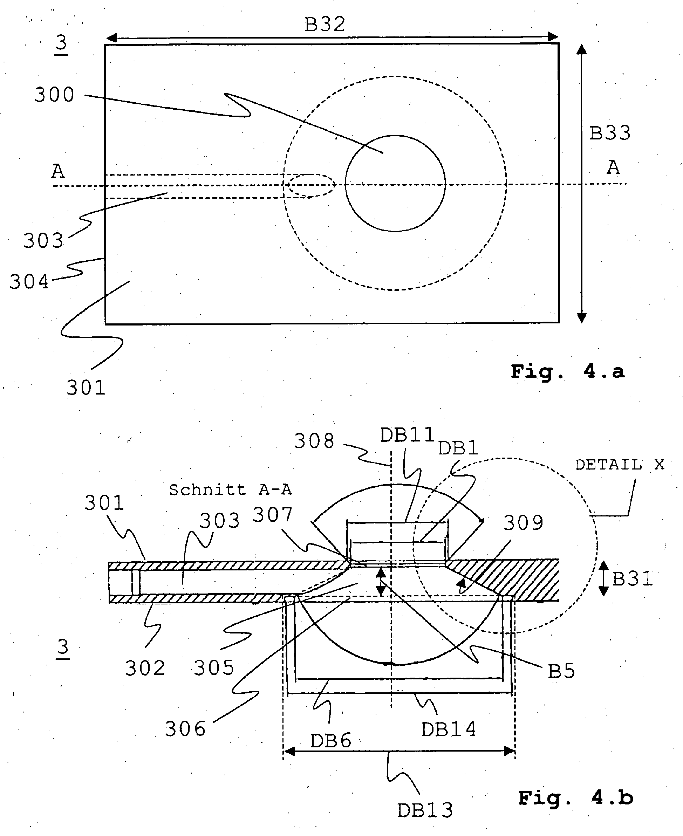

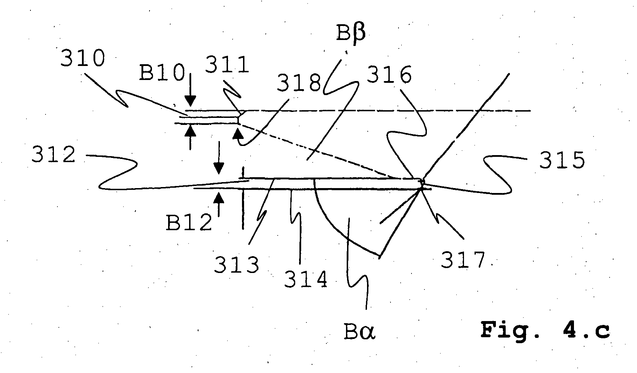

Fig. 4.a zeigt schematisch in einer Aufsicht die Oberseite der Basisplatte aus Fig. 1.
Fig. 4.b zeigt schematisch eine Schnittdarstellung der Basisplatte aus Fig. 4.a entlang der Achse A-A.
Fig. 4.c zeigt schematisch eine vergrößerte Darstellung des Bereichs X aus Fig. 4.b

### Detaillierte Beschreibung der Figuren

Zunächst zeigt Figur 1.a eine vereinfachte schematische Darstellung des erfindungsgemäßen Federsystems im zusammengebauten Zustand während des Betriebs. Das Federsystem umfaßt erfindungsgemäß eine Basisplatte 3, ein Zwischenteil 2 und einen Kolben 1. Das Zwischenteil 2 ist auf der Basisplatte 3 angeordnet und insbesondere im Betriebszustand, d.h. bei eingeschaltetem Luftstrom, gegenüber der Basisplatte 3 beweglich und kann sich horizontal und vertikal zu dieser bewegen. Der Kolben 1 ist innerhalb des Zwischenteils 2 beweglich angeordnet und trägt, insbesondere im Betriebszustand, eine auf ihm angeordnete Last 4. Die Basisplatte 3 ist vorzugsweise ihrerseits mit einer Haltevorrichtung verbunden oder in bzw. auf einem Gestellsystem 5 angeordnet. Das Federsystem umfaßt somit ein vertikal und horizontal wirksames Luftlager und stellt insbesondere ein wirksames Mittel zur Schwingungsisolation einer Last 4 dar.

Die Erfindung basiert auf der Bestimmung einer Luftlagergeometrie, die zur Aufnahme von Lasten von 500 bis ca. 1500 kg bei minimalem Luftverbrauch und/oder kleinstem Kraftrauschen geeignet ist. Diese Geometrie wird hierbei durch einzuhaltende vorzugsweise experimentell ermittelte Parameterverhältnisse beschrieben.

Das wesentliche Prinzip besteht darin, daß über die Öffnung 300 in der Basisplatte 3, insbesondere in dem Hohlraum 100 des Kolbens 1, ein erhöhter Druck oder Luftdruck gegenüber der Umgebung, vorzugsweise ein erhöhter Luftdruck von etwa 8 bar, bereitgestellt wird, welcher den innerhalb des Zwischenteils 2 angeordneten Kolben 1 anhebt. Dieser ist somit von der Umgebung mechanisch entkoppelt. Dadurch wird die Übertragung von Vibrationen oder Schwingungen der Umgebung, welcher beispielsweise bei einem direkten Kontakt über die Basisplatte 3 auf die zu ruhende Masse oder Last 4 übertragen werden oder werden könnten, deutlich reduziert. Zur vertikalen Stabilisation weist der Kolben 1 an seiner Mantelaußenseite 101 eine Einschnürung 102 und in der Seitenwand 103 eingebrachte Öffnungen 104 auf. Entsprechend kann sich auch ein Druck zwischen der Außenseite 101 des Kolbens 1 und der Innenseite 200 des Zwischenteils 2 aufbauen und das Federsystem auch horizontal stabilisiert werden. Die Einschnürung 102 in dem Mantel 103 bildet dabei ein konisches Spaltlager 6 aus. Die Einschnürung 102 der Kolbenaußenseite 101 entspricht der Form zweier vorzugsweise gleicher Kegelstümpfe, die über ihre gemeinsame Deckfläche miteinander verbunden sind und im Inneren einen zylindrischen Hohlraum 100 umschließen. In einer übertriebenen Darstellung entspricht das äußere Erscheinungsbild des Kolbens 1 der Form einer Sanduhr.

Im Betriebszustand wird durch den über die Öffnung 300 in der Basisplatte 3 bereitgestellten Druck jedoch nicht nur der Kolben 1 sondern auch das Zwischenteil 2 leicht angehoben. Dadurch bildet sich ein Spalt 7 zwischen der Unterseite 201 des Zwischenteils 2 und der Oberseite 301 der Basisplatte 3. Um ein zur Rauschreduzierung des Federsystems erforderliches Strömungsprofil der strömenden Luft zu ermöglichen, weist die Unterseite 201 einen spitzen Winkel Zα zur Horizontalen auf. Dadurch bilden die Unterseite 201 des Zwischenteils 2 und die Oberseite 301 der Basisplatte 3 ein konisches Spaltlager 9 aus.

Das erfindungsgemäße Federsystem und seine Funktionsweise sind anschließend noch weiter im Detail beschrieben. Nachfolgend wird das Federsystem auch als Isolator oder Vertikal- und Horizontal-Luftlager oder Gasfeder, das Zwischenteil 2 als Führungsgehäuse oder als Horizontallager und der Kolben 1 als Vertikalkolben oder Vertikallager bezeichnet.

Figur 1.b zeigt dazu eine detaillierte schematische Darstellung des erfindungsgemäßen Federsystems im zusammengebauten Zustand. Sie zeigt ein statisches kombiniertes Vertikal- und Horizontal-Luftlager, welches im wesentlichen aus drei Teilen besteht: der Basisplatte 3, dem äußeren Zwischenteil 2 mit integriertem Horizontallager und dem inneren Kolben 1 des Vertikallagers. Generell wird über ein Servodruckventil, einen pneumatischen Tiefpaß, umfassend einen dem Servoventil nachgeschalteten oder in Reihe geschalteten Druckluftbehälter mit speziellen Volumen sowie eine dem Volumen nachgeschalteten Drossel, Druckluft in das Volumen unter dem Kolben eingespeist.

Die Luft wird dabei über den zwischen Basisplatte 3 und dem Horizontallager 2 entstehenden Spalt 7 versuchen zu entweichen und hebt dabei das Horizontallager 2 um einen bestimmten Hub von der Basisplatte 3 an. Typischerweise beträgt dieser Hub etwa 3 bis 20 µm. Wegen der typischen zu lagernden oder zu isolierenden Masse von 500 bis 10,000 kg liegen die die Tragfähigkeit der Isolatoren bestimmenden effektiven Durchmesser, insbesondere des Horizontallagers 2 und des Vertikalkolbens 1, je nach Anzahl der zu verwendeten Isolatoren, zwischen 150 und 300 mm. Die typischerweise benutzten Drücke betragen dabei etwa 3 bis 7 kg/cm^2 in dem Hohlraum 100 des Kolbens 1.

Das typische Lagereigenrauschen oder Rauschen, welches ein Maß für die Bewegung, Vibrationen oder Schwingungen des Systems ist und beispielsweise mittels an der zu lagernden Last 4 angeordneter Beschleunigungssensoren ermittelt wird, beträgt im Mittel etwa 0.1N.

Das sogenannte Lagerrauschen oder die Vibration des Systems kann beispielsweise durch die in dem Federsystem oder Federeinrichtung strömende Luft verursacht oder induziert werden, welche über den zwischen der Basisplatte 3 und dem Horizontallager 2 entstehenden Spalt 7 sowie, beispielsweise über die Öffnung 104, dem Ringspalt 8 zwischen Horizontallager 2 und Vertikalkolben 1 entweicht. Dabei kann die Luft zwischen dem Horizontallager 2 und dem Vertikalkolben 1 sowohl über die integriertem Löcher 203 oder Bohrungen in der Wand 202 als auch nach oben über den Spalt 10 zwischen der inneren Oberkante 204 des Horizontallagers 2 und der äußeren Oberkante 105 des Vertikallagers 1 nach außen entweichen.

Das Eigenrauschen oder Kraftrauschen eines luftgelagerten Schwingungsisolationssystems wird insbesondere aufgrund auftretender nicht-laminarer Luftströmungsverhältnisse und eines damit verbundenen Strömungsabrisses generiert oder auch aufgrund von Schwankungen des Versorgungsluftdruckes. Der typischerweise über die beschriebenen Spalte 7, 10 und Löcher 203 entweichende Luftvolumenstrom beträgt dabei etwa 20 bis 50 N1/min (Normliter/min) (pro Luftfeder/Gaslager).

Es sind im Rahmen der Erfindung zumindest drei Anwendungsparameter zu optimieren. Es gilt nämlich die Tragkraft eines Isolators bei gleichzeitig kleinstem Bauraum zumindest zu erhöhen, während gleichzeitig ein minimaler Luftverbrauch gewünscht ist unter Beachtung, daß normalerweise eine Druckluftversorgung mit mehr als 8 bar nicht zur Verfügung steht. Dieser Maximaldruck erlaubt die Berechnung eines erforderlichen effektiven Vertikalkolbendurchmessers.

Soll zum Beispiel die Traglast des Lagers 1250 kg betragen und steht ein Druck von 8 bar zur Verfügung, ergibt sich ein minimaler erforderlicher Durchmesser des Kolbens von 195 mm. Während der Außendurchmesser des Vertikalkolbens 1 damit feststeht, muß das Horizontallager 2 gleichzeitig, unter der Annahme eines geringen Bauraums, eine minimale Wandstärke besitzen.

Hierbei sei noch einmal erwähnt, daß der innerhalb des Luftlagers zur Verfügung stehende Druck insbesondere über die entsprechenden Luftlagerspalte 7 und 8 entweichen kann. Um diesen Luftabfluß minimal zu halten, wird versucht den Spalt 10 oder Luftspalt zwischen Horizontallager 2 und Vertikalkolben 2 zu minimieren. Dabei ist man grundsätzlich durch die Fertigungstechnik und die Möglichkeit spanabhebende Bearbeitung noch in der Bearbeitungsmaschine zu fixieren beschränkt.

Die noch zu bearbeitende Wandstärke beschränkt dabei die Möglichkeit, den für die Tragkraft wichtigen effektiven Lastdurchmesser des Kolbens zu maximieren, wobei gleichzeitig die Gesamtbaubreite des Isolators zu minimieren ist. Es sind insbesondere zumindest die genannten Anwendungsparameter zu optimieren.

Für die typischen Traglasten sollte, vorzugsweise in einer vorliegenden Ausführungsform, eine dabei eine Wandstärke DZW von 10 mm bis 12 mm nicht unterschritten werden. Entsprechend der Fertigungs- und Materialmöglichkeiten hat sich die Aluminium-Legierung AlSi1MgMn (ENAW-6082) (oder auch ENAW6060, 6061, 2014, 7020, 7022, oder x40Cu13 4034) als besonders geeignetes Material für den Kolben und das Zwischenteil erwiesen.

Generell scheint dabei zu gelten, daß der Durchmesser DK1 der Oberseite 106 des Kolbens 1 zu der Wandstärke DZW des Zwischenteils 2 in einem Verhältnis von etwa 10,7 bis 15,1 stehen sollte. Auf diese Weise kann ein minimaler Spalt 10 von etwa 5 µm erreicht werden, welcher insbesondere in Verbindung mit der Wandstärke DZW steht.

Wie bereits vorstehend ausgeführt, entweicht Luft über den zwischen der Basisplatte 3 und dem Horizontallager 2 entstehenden Spalt 7 sowie über den Ringspalt 8 zwischen Horizontallager 2 und Vertikalkolben 1, wobei die Luft im Detail zwischen dem Horizontallager 2 und dem Vertikalkolben 1 sowohl über die integrierten Löcher 203 in der Wand 202 als auch nach oben über den Spalt 10 nach außen treten kann. Der Spalt 10 besitzt dabei eine Breite 11 von etwa 5 µm. Insbesondere im Betriebszustand weist der Querschnitt der Öffnungen 203 in der Seitenwand 202 und eine umlaufende in dem Kolbenmantel 103 eingebrachte Vertiefung 109 oder Ringspalt zumindest abschnittsweise eine Schnittfläche auf.

Da das Rauschen oder Eigenrauschen des Federsystems insbesondere über den aus dem Federsystem austretenden Luftstrom beeinflußt wird, ist vorzugsweise die Wahl der Abmessungen und Formen entsprechender Oberflächen und Kanten, an welchen der Luftstrom entlang strömt, wie z.B. die Kanten 105, 202 oder die äußere untere Kante 205 der Unterseite 201 des Zwischenteils 2, von entscheidender Bedeutungen für ein möglichst rauscharmes Federsystem. Dadurch wird ersichtlich, daß beispielsweise eine einfache Vergrößerung des Vertikalkolbenquerschnitts zwar eine erhöhte Tragfähigkeit bewirkt, dies jedoch bei gleicher Geometrie ein erhöhtes Rauschen des Federsystems verursacht oder verursachen kann. Entsprechend sind neben der oben stehend genannten drei Anwendungsparameter weiterhin noch eine Vielzahl von Parametern optimiert, wie die Winkel Kα1, Kα2, Kβ1 und in den Ansprüchen beschrieben Verhältnisse.

Daher sind insbesondere die wesentlichen Kanten entsprechend gefast oder verrundet und die genannten Verhältnisse der Abmessungen gewählt, um vorzugsweise die Strömungen der Luft im Federsystem zu beeinflussen, vorzugsweise zu steuern, um ein Kraftrauschen des Federsystems zu vermindern.

Die Vermessung der Vibrationen oder Schwingungen einer zu lagernden Masse 4 oder einer zu lagernden Apparatur, um beispielsweise über Aktoren entsprechend kompensierende Gegenmaßnahmen zu ergreifen, kann beispielsweise über entsprechend ausgebildete Schwingungssensoren erfolgen. Zur Vibrationserfassung in horizontaler Ebene und vertikaler Ebene werden vorzugsweise jeweils drei Sensoren derart eingesetzt, daß nicht nur eine Translation sondern auch eine Rotation der Last 4 erfaßt oder aus den gemessenen Positionen bestimmt werden kann.

Figur 1.c zeigt dazu das Ergebnis einer Untersuchung der Positionsstabilität eines Federsystems mit einer Tragfähigkeit von max. 1250 kg und nicht abgestimmter Geometrie als Funktion der Zeit. Die Positionsschwankung in horizontaler Ebene ist in den Graphen aufgetragen, in denen die Positionsschwankungen in horizontaler Ebene X1, X2 und X3 auf der Ordinate aufgetragen sind. Die Positionsschwankung in vertikaler Ebene ist entsprechend in den Graphen Y1, Y2 und Y3 aufgetragen. Dargestellt sind die Ausschläge der zu tragenden Last 4 um den Ruhepunkt Null herum in zwei gegenüber liegende Richtungen, der hier als maximale bzw. minimale Position bezeichnet sind. Die Messung wurde dabei über einen Zeitraum von acht Stunden durchgeführt. Die Störungen sind künstlichen oder natürlichen seismischen Ursprungs, bzw durch das Eigenrauschen des Luftlagers bedingt. Zum Vergleich dazu zeigt Figur 1.d das Ergebnis einer Untersuchung der Positionsstabilität eines Federsystems mit einer erfindungsgemäßen Geometrie unter vergleichbaren Bedingungen.

Während die maximalen und die minimalen Ausschläge des untersuchten Systems in horizontaler Ebene im wesentlichen vergleichbare Eigenschaften oder Ausschläge liefern, zeichnet sich das erfindungsgemäße Federsystem in vertikaler Richtung durch deutlich kleinere Schwankungen aus. Beispielsweise zeigt das System aus Figur 1.c bei Z2 einen Ausschlag von minimal -19,9 µm und maximal 10,9 µm, während das abgestimmte System einen Ausschlag von minimal -7,9 µm und maximal von 3,7 µm zeigt.

Das Federsystem weist weiterhin vorteilhaft, insbesondere bei vergleichbaren oder verbesserten Rauscheigenschaften gegenüber dem Stand der Technik, bei einer Druckbeauschlagung von etwa 6.85 bar die erhöhte Tragfähigkeit von etwa 1250 kg und einen gegenüber dem Stand der Technik verringerten Luftverbrauch von 40 Nl/min (Normliter pro Minute, pro Luftlager). Die nachfolgend beschriebenen Figuren zeigen eine mögliche Ausführungsform der Bestandteile des erfindungsgemäßen Federsystems.

Es ist nachfolgend im Detail nicht mehr weiter erläutert, welche einzelnen Effekte durch die gewählten Geometrien, Abmessungen oder deren Verhältnisse in dem Federsystem bewirkt werden. Die Abmessungen sind vorzugsweise in einer Versuchsreihe entsprechend den Anforderungen der vorliegenden Erfindung, wie beispielsweise geringer Luftverbrauch, vermindertes Kraftrauschen und erhöhte Tragfähigkeit angepaßt. Die einzelne Bauteile liegen auf einer Achse. Entsprechend sind die Achse 108 des Kolbens 1, die Achse 208 des Zwischenteils 2 und die Achse 308 der Basisplatte koaxial angeordnet.

Figur 2.a zeigt hierzu schematisch dazu eine seitliche Außenansicht des Kolbens 1 aus Figur 1.b. Der Kolben 1 bzw. die Seiten- oder Außenansicht des Kolbens 1 wird nachfolgend ausgehend von der Oberseite 106 des Kolbens 1 in Richtung seiner Unterseite 107 abschnittsweise beschrieben.

Im oberen Kantenbereich 105 der Außenseite 101 des Mantels 103 verläuft ein erster Abschnitt 111 des Kolbens 1 mit einem Außendurchmesser DK1 über eine Länge K1. Die Außenseite 101 verläuft dabei parallel zur Achse 108 des Hohlkörpers oder Kolbens 1. Ausgehend von der Oberseite 106 oder Deckfläche des Kolbens 1 ist in dem ersten Abschnitt 111 der senkrechte Abstand jedes Punkts an der Außenseite 101 des Mantels 103 zur Achse 108 konstant. Ein konstanter Abstand oder eine konstante Abmessung ist derart zu verstehen, daß im Rahmen der erreichbaren Fertigungstoleranzen Abstände oder entsprechende Abmessungen gleich groß sind. Die entsprechende Bearbeitung der einzeln beschriebenen Bauteile erfolgt durch feinmechanische Bearbeitung. In der vorliegenden Ausführungsform beträgt die Länge K1 etwa 2 mm und der Außendurchmesser DK1 des ersten Abschnitts etwa 161 mm.

Unterhalb des oberen Kantenbereichs 105 oder des ersten Abschnitts 111 schließt sich ein zweiter Abschnitt 112 an, in welchem der Durchmesser DK2 der Außenseite des Mantels 103 ausgehend vom dem genannten Außendurchmesser DK1 über eine Höhe K2 von etwa 61,5 mm kontinuierlich auf einen minimalen Wert DK_{MIN} von etwa 160,99 mm abnimmt. Dieser zweite Abschnitt 112 oder die Außenseite 101 des zweiten Abschnitts 112 besitzt somit die Form eines Kegelstumpfes 140, dessen Deckfläche in Richtung der Unterseite 107 des Kolbens 1 liegt. Die Mantelfläche des Kegelstumpfes 140 oder die Außenseite 101 des zweiten Abschnitts 112 schließt dabei mit der Achse 108 einen Winkel von Kα1 von etwa 0,005° ein.

Dem zweiten Abschnitt 112 schließt sich unterhalb ein dritter Abschnitt 113 an, in dem der Durchmesser DK3 der Außenseite 101 des Mantels 103 über eine Strecke K3 ausgehend vom dem genannten minimalen Außendurchmesser DK_{MIN} über eine Höhe K3 von etwa 61,5 mm wieder kontinuierlich bis auf einen Wert zunimmt, welcher vorzugsweise dem genannten Durchmesser DK1 des ersten Abschnitts 111 entspricht.

Folglich besitzt ebenso der dritte Abschnitt 113 oder die Außenseite 101 des dritten Abschnitts 113 die Form eines Kegelstumpfes 141, dessen Deckfläche jedoch in Richtung der Oberseite 106 des Kolbens 1 liegt. Die Mantelfläche des Kegelstumpfes 141 oder die Außenseite 101 des dritten Abschnitts 113 schließt dabei mit der Achse 108 hier ebenso einen Winkel Kα2 von etwa 0,005° ein.

Die Außenseite 101 des Mantels 103 wird somit abschnittsweise, hier in dem zweiten 112 und dem dritten 113 Abschnitt, durch einen oberen Kegelstumpf 140 und einen unteren Kegelstumpf 141 gebildet, welche eine gemeinsame insbesondere gleiche Deckfläche besitzen, so sich eine Einschnürung 102 mit einem Durchmesser von DK_{MIN} in der Außenseite 101 des Mantels 103 ergibt.

Dem dritten Abschnitt 113 schließt sich unterhalb ein vierter Abschnitt 114 der Außenseite 101 der Seitenwand oder des Mantels 103 an, welcher mit einem Außendurchmesser DK4 von 161 mm über eine Länge K4 von 2 mm parallel zur Achse 108 des Kolbens 1 verläuft. Der erste 111 und der zweite 112 Abschnitt sind somit spiegelsymmetrisch zum dritten 113 und vierten 114 Abschnitt, wobei die Spiegelachse durch eine Achse gebildet wird, welche in der gemeinsamen Deckfläche von den beiden Kegelstümpfen 140, 141 des dritten 113 bzw. vierten 114 Abschnitts liegt. Vorzugsweise ist der jeweilige Außendurchmesser der Grundfläche des zweiten und dritten Abschnitts gleich groß.

Weiterhin schließt sich dem vierten Abschnitts 114 der Außenseite 101 ein fünfter Abschnitt 115 der Höhe K5 von 5 mm an, welcher als eine umlaufende Vertiefung 109 oder Ringspalt im Mantel 103 mit einem Außendurchmesser DK5 von 155 mm ausgebildet ist. Der Boden der Vertiefung 109 verläuft dabei im wesentlichen parallel zur Achse 108 und die Seitenwand der Vertiefung 109 im wesentlichen senkrecht zum Boden der Vertiefung 109. Die Unterkante des Aussparung 109 liegt auf einer Höhe K9 von 74 mm.

An den fünften Abschnitt 115 grenzt unterhalb ein sechster Abschnitt 116 der Außenseite 101 des Mantels 103, welcher mit einem Außendurchmesser DK6 von 161 mm über eine Länge K6 von 20 mm parallel zur Achse 108 verläuft, d.h. der senkrechte Abstand jedes Punkts der Außenseite 101 des sechsten Mantelbereichs 116 zur Achse 108 ist konstant. Die untere Kante 110 des sechsten Abschnitts 116 weist eine Fase auf. Die Fase schließt dabei über eine Länge K61 von etwa 1,5 mm einen Winkel Kβ1 von 15°, vorzugsweise zur Achse 108 des Kolbens 1, ein. In einer alternativen Ausführungsform kann die untere Kante 110 des sechsten Abschnitts 116 auch verrundet sein.

Dem sechsten Abschnitt 116 der Außenseite 101 folgt ein unterhalb angrenzender siebter Abschnitt 117, der über ein Länge oder Höhe K7 von 5 mm einen gegenüber dem sechsten Abschnitt 116 reduzierten Durchmesser DK7 besitzt. Der Durchmesser DK7 beträgt hier 151 mm. Der obere Abschnitt des siebten Abschnitts 117, der an dem sechsten Abschnitt 116 angrenzt, verläuft über eine Höhe K71 von etwa 2,3 mm parallel zur Achse 108 des Kolbens 1 und geht in einen unteren Abschnitt über, der die untere Kante 120 umfaßt. Die untere Kante 120 ist gefast. Die Fase schließt über eine Länge K72 von etwa 2 mm bis 3 mm einen Winkel Kβ2 von 45° mit der Achse 108 des Kolbens ein. In einer alternativen Ausführungsform kann die untere Kante 120 des siebten Abschnitt 117, welcher der unteren äußeren Kante des Kolbens 1 entspricht, auch verrundet sein.

Der Abstand KE von der Unterseite 107 des Kolbens 1 bis zur Einschnürung 102 in dem Mantel 103 beträgt letztendlich unter Beachtung der einzeln beschrieben Abschnitte 91,5 mm.

In der Unterseite des Mantels sind vier Aussparungen 121, von der in Figur 2.a jedoch nur eine zu sehen ist, eingebracht, welche sich jeweils senkrecht zur Achse 108 des Kolbens 1 von der Innenseite 122 der Kolbenwand oder des Kolbenmantels 103 zur Außenseite 101 hin erstrecken.

Die genannten vier Aussparungen 121 sind vollständig in Figur 2.d zu erkennen. Figur 2.d zeigt eine schematische Darstellung der Unterseite 107 des Kolbens 1. Jeweils zwei Aussparungen 121 sind diametral zueinander angeordnet. Die jeweils benachbarten Aussparungen 121 sind in der Unterseite 107 des Mantels 103 in einem gleichen Winkel, hier von etwa 90°, zueinander angeordnet. Der insbesondere gerade Boden der jeweiligen Vertiefung 121 verläuft dabei im wesentlichen parallel zur Grundfläche des Kolbens und die jeweilige Seitenwand der Vertiefung 121 im wesentlichen senkrecht dazu. Zudem sind in der Unterseite 107 des Kolbens 1 drei Vertiefungen 123 oder Löcher zur Befestigung während bestimmter Fertigungsschritte eingebracht und detailliert in der nachfolgenden Figur 2.i beschrieben. Zudem ist das Loch 124 oder die Öffnung in der Deckplatte 125 zu erkennen.

Figur 2.c zeigt eine schematische Schnittdarstellung des Kolbens 1 entlang der Achse A-A aus Figur 2.d. Zu erkennen sind der Mantel 103 und die Deckplatte 125 des Kolbens 1, welche einstückig oder einteilig ausgebildet sind. Der Kolben 1 besitzt eine Gesamthöhe KGES von 153 mm und einen Innendurchmesser DKI von 131 mm, wobei der Hohlraum 100 einem Zylinder mit kreisförmiger Grundfläche entspricht und eine Höhe KI von 119 mm besitzt. Die Deckplatte 125 hat eine Dicke KD von 34 mm. Für den Mantel 103 und/oder die Deckplatte 125 hat sich die Legierung AlSi1MgMn (ENAW-6082) als vorteilhaft erwiesen.

Insbesondere zur Lagerung des Kolbens 1 an der zu tragenden Masse 4 weist die Deckplatte 125 an ihrer Oberseite 106 eine Ausnehmung 127 oder Vertiefung auf. Die Vertiefung 127 hat einen kreisförmigen Querschnitt und ist vorzugsweise koaxial zur Achse 108 des Kolbens in der Deckplatte 125 eingebracht. Die Wand der Vertiefung 127 ist dabei im wesentlichen parallel und der Boden der Vertiefung 127 im wesentlichen senkrecht liegend zur Achse 108 des Kolbens ausgebildet. Die Vertiefung 127 besitzt einen Durchmesser DK27 von 50 mm und eine Tiefe K27 von 20 mm.

Zusätzlich zu der Vertiefung 127 ist eine, vorzugsweise koaxial zur Achse 108, insbesondere kreisförmige Öffnung 124 in die Deckplatte 125 eingebracht. Die Öffnung 124 oder das Loch weist einen Durchmesser einer M8 Bohrung auf. Die Tiefe oder Länge der Öffnung 124 entspricht der Dicke KD der Deckplatte 125 oder bei Vorliegen der Vertiefung 127 der um die Tiefe der Vertiefung 127 reduzierten Dicke der Deckplatte 125.

In der Innenseite 122 des Mantels 103 ist eine umlaufende Ausnehmung 128, welche in ihrem Querschnitt der Form eines vorzugsweise gleichschenkligen Dreiecks entspricht, eingebracht. Die Ausnehmung 128 ist in etwa im oberen Bereich des dritten Abschnitts 113 eingebracht. Im Detail liegt die untere Kante des Dreiecks auf einer Höhe K28, gemessen von der Unterseite 107 des Kolbens 1 aus, von 74 mm. Die dreieckige Ausnehmung 128 besitzt vorzugsweise die Gestalt eines im wesentlichen rechtwinkligen Dreiecks, welches eine Höhe von 7,5 mm hat. Die dreieckige Ausnehmung 128 hat folglich einen Außendurchmesser DK28 von 146 mm.

In der Ausnehmung 128 ist eine Mehrzahl von Öffnungen 104, hier von acht Öffnungen 104, eingebracht, so daß das innere Volumen des Kolbens 1 mit dem Außenbereich des Kolbens 1 verbunden ist, die beiden Bereich miteinander kommunizieren können und ein Fluid, vorzugsweise Luft, zwischen den beiden Seiten ausgetauscht werden kann. Von den genannten acht Öffnungen 104 sind in Figur 2.c nur zwei Öffnungen 104 in der Wand 103 zu erkennen. Zusätzlich sind noch drei weitere Öffnungen 104 schematisch dargestellt. Die benachbarten Öffnungen 104 sind zueinander jeweils derart angeordnet, so daß sie einen im wesentlichen konstanten Winkel einschließen. Dabei können die Öffnungen 104, die insbesondere identisch oder gleichartig sind, auch jeweils diametral zueinander angeordnet sein. Außerdem können auch auch mehr Löcher eingebracht sein, sofern diese gleichmäßig verteilt sind.

Die Öffnungen 104 sind dazu im Detail in den Figuren 2.g und 2.h dargestellt. Die Öffnungen 104 sind insbesondere abschnittsweise aufgebaut und verlaufen zumindest abschnittsweise geneigt zur Achse 108 des Kolbens. Die Öffnungen 104 weisen dabei einen ersten Abschnitt 131 auf, der im wesentlichen zylindrisch oder zumindest zylinderartig ausgestaltet ist. Die Grundfläche des ersten zylindrischen Abschnitts 131 liegt dabei derart in dem oberen Schenkel der Ausnehmung 128, daß die Achse des Zylinders im wesentlichen mit der Schenkelhalbierenden des Ausnehmung 128 übereinstimmt. Der vorzugsweise kreisförmige erste Abschnitt 131 weist einen Durchmesser DK31 von 8 mm und eine K31 Länge von 12 mm auf.

Die Öffnungen 104 weisen zudem einen zweiten Abschnitt 132 auf, der im wesentlichen der Form eines vorzugsweise geraden Kegels entspricht und die Grundfläche des Kegels derart in der Deckfläche des vorzugsweise zylindrischen ersten Abschnitts 131 liegt, so daß die Achse des Zylinder im wesentlichen der Achse des Kegels entspricht. Die Grundfläche des Kegels entspricht im wesentlichen der Deckfläche des zylindrischen ersten Abschnitts 131. Der Kegel besitzt eine Höhe von etwa 1,2 mm, wodurch sich eine Gesamthöhe K3132 des Zylinders und des Kegels von etwa 12 mm ergibt.

Ferner weisen die Öffnungen 104 einen dritten Abschnitt 133 auf, der im wesentlichen zylindrisch oder zumindest zylinderartig ist. Die Achse des dritten Abschnitts 133 steht im wesentlichen senkrecht zur Achse 108 des Kolbens 1 und mündet auf seiner inneren Seite, vorzugsweise im wesentlichen mittig, in die Mantelfläche des kegelförmigen zweiten Abschnitts 132 und auf seiner äußeren Seite die Außenseite 101 des Kolbens 1. Dieser dritte Abschnitt 133 stellt somit die eigentliche Verbindung zwischen dem Inneren oder Hohlraum 100 des Kolben 1 und seiner Außenseite 101 her hat einen Durchmesser DK33 von 0,3 mm. Die außenliegende Kante des zylindrischen dritten Abschnitts 133 ist ein ungefaste Kante.

In Figur 2.e ist zudem eine Aussparung 129 oder Bohrung in der Oberseite 106 des Kolbens 1 dargestellt zur Befestigung während des Fertigungungsprozesses. Dabei wird unter einer Bohrung im Sinne der Anmeldung nicht notwendigerweise verstanden, daß sich das Einbringen der Aussparung 129 oder Bohrung auf das Verfahren des Bohrens beschränkt oder die Bohrung eine kreisförmige zylindrische Form hat. Figur 2.b zeigt dazu eine schematische Darstellung der Oberseite 106 des Kolbens 1. Im Detail sind in der Oberseite 106 des Mantel 103 drei insbesondere kreisförmige Bohrungen 129 in einem Winkel von 120° zueinander und auf einem Kreisdurchmesser DK29 von 138 mm eingebracht. Die Achse der Bohrungen 129 verlaufen dabei im wesentlichen parallel zur Kolbenachse 108, wobei eine der Bohrungen 129 auf der mit B-B bezeichneten Achse liegt und die zwei anderen dadurch in ihrer Lage festgelegt sind. In den Bohrungen 129 oder Gewindebohrungen ist jeweils ein Gewinde der Bohrung M4 über eine Länge von mindestens 8 mm eingeschnitten.

In Figur 2.e ist zudem eine Aussparung 130 oder Bohrung in der Unterseite 107 des Kolbens 1 dargestellt. Die Aussparung 107 ist zudem in einer Detailansicht in Figur 2.i und in Figur 2.d dargestellt.

Figur 2.d zeigt dazu eine schematische Darstellung der Unterseite 107 des Kolbens 1. In der Unterseite 107 des Mantel 103 sind dabei drei insbesondere kreisförmige Bohrungen 130 in einem Winkel von 120° zueinander und auf einem Kreisdurchmesser DK30 von 138,6 mm eingebracht zur Befestigung des Lagers während des Fertigungsprozesses. Die Achsen der Bohrungen 130 verlaufen dabei im wesentlichen parallel zur Kolbenachse 108, wobei eine der Bohrungen 130 auf der mit B-B bezeichneten Achse liegt und die zwei anderen dadurch in ihrer Lage festgelegt sind. In den Bohrungen 130 oder Gewindebohrungen ist jeweils ein Gewinde der Größe M4 über eine Länge von mindestens 8 mm geschnitten.

Weiterhin zeigen die Figuren 2.j und 2k jeweils eine perspektivische Sicht auf die Oberseite 106 bzw. die Unterseite 107 des Kolbens 1 mit den entsprechenden vorstehend beschrieben Merkmalen.

Die nachfolgenden Ausführungen stellen eine detaillierte Beschreibung einer bevorzugten Ausführungsform des bereits in Figur 1.b gezeigten Zwischenteils 2 dar und beziehen sich auf die Figuren 3.a bis 3.k.

Figur 3.a zeigt dazu eine schematische Darstellung der Oberseite 206 des Zwischenteils 2, Figur 3.b eine schematische Schnittdarstellung des Zwischenteils 2 entlang der Achse A-A aus Figur 3.c und Figur 3.c eine schematische Darstellung der Unterseite 207 des Zwischenteils 2. Das Zwischenteil 2 besitzt vorliegend die Form eines hohlen Zylinders, welcher beidseitig zumindest abschnittsweise geöffnet ist und durch eine kreisförmige Grundfläche 210, eine kreisförmige Deckfläche 209, den Mantel 202 und eine durch den Mittelpunkt der Grundfläche 210 und den Mittelpunkt der Deckfläche 209 verlaufende Achse 208 definiert ist.

Das Zwischenteil 2 besitzt eine Gesamthöhe ZGES von 168 mm. Der Innendurchmesser DZI des Zwischenteils 2 beträgt vorliegend 161,01 mm und der Außendurchmesser DZA 191 mm, wodurch sich eine Wandstärke DZW oder Manteldicke des Zylinders 2 von 15 mm ergibt. In einer weiteren Ausführungsform besitzt die Wandstärke DZW einen Wert von 12 mm. Eine Bodenplatte 211 besitzt eine Dicke oder Höhe Z11 von 12 mm. Die Bodenplatte 211 und der Mantel 202 sind in einer bevorzugten Ausführungsform einteilig ausgebildet. Die Oberseite 206 des zylindrischen Zwischenteils 2 ist vorliegend vollständig geöffnet, d.h. es ist keine Deckplatte vorgesehen. Dagegen ist die Öffnung 212 in der Unterseite 207 des Zwischenteils 2 oder in der Bodenplatte 211 nur abschnittsweise geöffnet. Die Bodenplatte 211 des Zylinders 2 weist eine koaxial zur Achse 208 eingebrachte kreisförmige Öffnung 212 auf. Die Öffnung 212 ist dabei abschnittsweise aufgebaut und im Detail nachfolgend in den Figuren 3.b und Figur 3.f beschrieben.

Die Öffnung 212 in der Bodenplatte 211 weist an ihrer Unterseite 207, über eine Höhe Z1 von 2 mm, relativ zur Grundfläche 210, einen ersten Abschnitt 221 mit einem Durchmesser DZ1 von 100 mm auf.

Dem ersten Abschnitt 221 schließt sich oberhalb ein zweiter Abschnitt 222 der Öffnung 212 an, der über eine Höhe Z2, relativ zur Grundfläche 210 des Zylinders oder Zwischenteils 2, einen gegenüber dem Durchmesser DZ1 reduzierten Durchmesser DZ2 hat. DZ2 beträgt hier 97 mm.

Ausgehend von dem zweiten Abschnitt 222 der Öffnung 212 in Richtung der Oberseite 206 des Zwischenteils 2 vergrößert sich der Durchmesser der Öffnung 212 in der Bodenplatte 211 über zumindest eine Stufe.

Entsprechend schließt sich dem zweiten Abschnitt 222 oberhalb ein dritter, vorzugsweise letzter, Abschnitt 223 an, welcher über eine Höhe Z3 von 4 mm einen Durchmesser DZ3 von 147 mm besitzt. Die Oberseite 213 der Bodenplatte 211 liegt dabei senkrecht zur Zylinderachse 208. Anschaulich gesprochen, ist die Öffnung 212 aus übereinander gestapelten Zylindern unterschiedlichen Durchmessers aufgebaut. Die obere Kante 214 des dritten Abschnitts 223 ist vorliegend gefast, wobei die Fase beidseitig eine Fasenbreite Z14 von 1 mm aufweist und daher insbesondere zu der Achse 208 in einem Winkel von 45° liegt. In einer alternativen nicht dargestellten Ausführungsform ist die obere Kante 214 verrundet. Oberhalb der Bodenplatte 211 ist eine umlaufende oder ringförmige Ausnehmung 215 in der Innenseite 200 des Mantels 202 eingebracht. Die Ausnehmung 215 hat eine Höhe Z15 von 3 mm und einen Durchmesser DZ15 von 162,5 mm.

Die Unterseite 207 der Bodenplatte 211 selbst besitzt einen gegenüber dem Außendurchmesser DZA des hohlen Körpers oder Zwischenteils 2 reduzierten Durchmesser DZ0. Der Durchmesser DZ0 der Unterseite 207 der Bodenplatte 211 liegt bei einem Wert von 188 mm. Der reduzierte Durchmesser DZ0 der Unterseite 207 resultiert aus einer Fase oder einer Verrundung an der äußeren unteren Kante 205 des Hohlkörpers. Der Fasenwinkel ist bestimmbar über die vertikale Fasenbreite von 2 mm und die horizontale Fasenbreite von 1,5 mm, welche sich aus der durch zwei geteilten Differenz von DA und DZ0 ergibt. Dabei ist die Verrundung vorzuziehen.

Die Unterseite 207 der Bodenplatte 211 verläuft dabei insbesondere abschnittsweise nicht parallel zur Grundfläche 210 des Zwischenteils 2. Dies ist besonders deutlich in den Figuren 3.f und 3.g zu erkennen. Die Unterseite 207 weist in einem ersten Abschnitt 231 über einen Durchmesser von DZ31 vielmehr eine Neigung auf. Der erste Abschnitt schließt dabei über seinen Durchmesser DZ31 von 185 mm mit der Horizontalen oder der Grundfläche 210 einen Winkel Zα von etwa 0,007° ein. Dem ersten Abschnitt 231 schließt sich außerhalb noch ein zweiter Abschnitt 232 mit einem Außendurchmesser DZ32 von 188 mm. Der genannte zweite Abschnitt 232 verläuft im wesentlichen parallel zur Grundfläche 210.

Durch den Winkel Zα in der Unterseite 207 der Bodenplatte 211 besitzt der erste Abschnitt 221 der Öffnung 212 in dem Bereich der inneren Kante 216 eine reduzierte Höhe. Dies ist in Figur 3.g noch einmal detailliert gezeigt.

Unter Bezugnahme auf die Figuren 3.b, 3.d und 3.e sind in dem Mantel 202 des Zwischenteils 2 vorzugsweise vier Löcher 203 oder Öffnungen angeordnet, welche vorzugsweise kreisförmig zylindrisch sind und sich von der Innenseite 200 des Mantels 202 zur Außenseite 217 des Mantels 202 erstrecken, so daß diese beiden Bereich miteinander kommunizieren können und ein Fluid zwischen den beiden Seiten zirkulieren kann. Die benachbarten Löcher 203 sind zueinander jeweils derart angeordnet, daß sie einen im wesentlichen konstanten Winkel, hier von 90°, zueinander einschließen. Dabei können die Löcher 203 auch diametral zueinander angeordnet sein.

Die Löcher 203 weisen einen Durchmesser von 4 mm auf und sind auf einer Höhe Z4 von 38 mm zentrisch angeordnet. Die Achse des jeweiligen Löcher 203 verläuft senkrecht zur Achse 208 des Zwischenteils 2. Zwei Löcher 203 sind auf der mit A-A bezeichneten Achse angeordnet, wodurch die Lage der restlichen Löcher 203 festgelegt ist.

Ferner sind in der Oberseite 206 des Mantels 202 drei Ausnehmungen 218 oder Bohrungen eingebracht. Hierzu wird Bezug genommen auf die Figuren 3.c und 3.h, wobei in letzterer eine Ausnehmung 218 vergrößert dargestellt ist. Diese sind in einem Winkel von 120° zueinander und mittig im Mantel 202, d.h. auf einem Kreisdurchmesser DZ18 von 176 mm, angeordnet, wobei eine der Ausnehmung 218 auf der mit A-A bezeichneten Achse liegt und die zwei anderen dadurch in ihrer Lage festgelegt sind. In den Ausnehmungen 218 oder Gewindebohrungen ist jeweils ein Gewinde der Bohrung M5 über eine Länge von mindestens 12 mm eingeschnitten. Die Achse der Ausnehmungen 218 verläuft dabei im wesentlichen parallel zur Kolbenachse 208. Zu erkennen ist zudem, daß die obere innere Kante 204 des Zwischenteils 2 eine Fase aufweist, die über eine vertikal Länge von 1,5 mm einen Winkel von etwa 15° insbesondere mit der Achse 208 einschließt. Die vorstehend genannte Spaltbreite 11 des Spalts 10 bezieht sich dabei auf den Außendurchmesser DK1 des Kolbens 1 an seiner Oberseite 106 und den Innendurchmesser DZI des Zwischenlagers und berücksichtigt nicht die beschriebene Fase der Kante 204.

Weiterhin zeigen die Figuren 3.j und 3.k jeweils eine perspektivische Sicht auf die Unterseite 207 bzw. die Oberseite 206 des Zwischenteils 2 mit den entsprechenden vorstehend beschrieben Merkmalen. Für den Mantel 202 und/oder die Bodenplatte 211 hat sich die Legierung AlSi1MgMn (ENAW-6082) als vorteilhaft erwiesen.

Die nachfolgenden Ausführungen beschreiben die bereits in Figur 1 gezeigte Basisplatte 3 und nehmen Bezug auf die Figuren 4.a bis 4.c.

Figur 4.a zeigt dazu schematisch die Oberseite 301 einer beispielhafte Ausführungsform der Basisplatte 3 in einer Aufsicht. Zu erkennen ist die in der Basisplatte 3 eingebrachte vorzugsweise kreisförmige Öffnung 300. Es ist angedeutet, daß sich der Querschnitt der Öffnung 300 von der Oberseite 301 zur Unterseite 302 hin vergrößert. Die Öffnung 300 besitzt zumindest abschnittsweise eine Form, welche im wesentlichen der Art eines Kegelstumpfes 305 entspricht. Der Kegelstumpf 305 ist im wesentlichen durch Grundfläche 306, Deckfläche 307, Kegelmantel 309 und eine durch den Mittelpunkt von Grund- 306 und Deckfläche 307 verlaufende Achse 308 definiert. Zudem ist ein Kanal 303 angedeutet, der von der Außenseite 304 der Basisplatte 3 seitlich in die Öffnung 300 oder in die Mantelfläche der kegelstumpfartigen oder -förmigen Öffnung mündet. Dies ist deutlich in Figur 4.b zu erkennen, in der die Basisplatte 3 schematisch in einer Schnittdarstellung entlang der Achse A-A aus Figur 4.a dargestellt ist. Figur 4.c zeigt schematisch eine vergrößerte Darstellung des Bereichs X aus Figur 4.b.

Der Querschnitt der Öffnung 300 ist sowohl an der Unterseite 302 als auch an der Oberseite 301 der Basisplatte 3 kreisförmig. Der Durchmesser DB1 des oberen Bereichs 310 weist, vorzugsweise an der Oberseite 301 der Basisplatte 3, einen Wert von 60 mm auf. Der Durchmesser DB1 an der Oberseite 301 entspricht insbesondere dem Durchmesser DB7 der Deckfläche 307 des genannten Kegelstumpfes 305. Der Kegelstumpf 305 besitzt eine Höhe B5 von 16,7 mm und eine Grundfläche 306 einen Durchmesser DB5 von 132 mm. Die in Figur 4.b dargestellten Mantellinien des Mantels 309 schließen einen Winkel Bβ von 130° zueinander oder jeweils von 65° mit der Achse 308 ein.

Oberhalb des Kegelstumpfes 305 schließt sich koaxial ein oberer vorzugsweise zylinderförmiger oder -artiger Bereich 310 kreisförmigen Querschnitts und mit einer Höhe B10 von 4 mm an, welcher in die Oberseite 301 des Basisplatte 3 mündet. Die äußere obere Kante 311 weist eine Fase auf. Die Fase selbst ist dabei über eine Strecke B11 durch einen Fasenwinkel von 45°, insbesondere zur Achse 308 des Kegelstumpfes 305, definiert. In einer alternativen Ausführungsform kann die äußere obere Kante 311 der Öffnung 300 auch verrundet sein. Durch die Fase ergibt sich an der Oberseite 301 ein Durchmesser DB11 der Öffnung 300 von 64 mm. Die durch den Kegelstumpf 305 und den oberen Bereich 310 gebildete Kante 318 kann zudem gefast oder verrundet sein.

Der Grundfläche 306 des Kegelstumpfes 305 schließt sich ein unterer vorzugsweise kegelstumpfartiger Bereich 312 kreisförmigen Querschnitts an, dessen Grund- 313 und Deckfläche 314 gegenüber der Grundfläche 306 des Kegelstumpfes 305 einen vergrößerten Durchmesser DB13 bzw. DB14 besitzen und koaxial zu diesem angeordnet sind. Dabei liegt die Grundfläche 313 des kegelstumpfartigen Bereichs 312 auf oder in der Grundfläche 306 des Kegelstumpfes 305, während seine Deckfläche 314 in der Unterseite 302 oder auf der Höhe der Unterseite 202 der Basisplatte 3 liegt. Zumindest der mittige Teil der Mantelfläche 315 des Bereich 312 weist einen Winkel Bα zur Grundfläche 314 oder der Unterseite 302 der Basisplatte 3 von etwa 55° bis 75° oder bevorzugt von etwa 66° auf. Die obere Kante 316 ist verrundet und weist dann vorzugsweise einen Verrundungsradius von 0,8 mm. Die untere Kante 317 ist ebenso verrundet und weist hier vorzugsweise einen Verrundungsradius von 0,2 mm auf. In einer alternativen Ausführungsform kann die untere Kante 317 auch gefast sein. Die Grundfläche 314 des unteren Bereich 312 besitzt einen Durchmesser DB14 von 143,1 mm. Die Höhe B12 des Bereichs 312 beträgt 4 mm.

Wie bereits ausgeführt, weist die Basisplatte 3 ferner einen vorzugsweise kreisförmigen Kanal 303 auf, dessen einer Zugang in die Öffnung 300, vorzugsweise in den Kegelmantel 309 der Öffnung 300 mündet. Der Zugang kann dabei sowohl im Sinne eines Eingangs und/oder Ausgangs verstanden werden. Die durch den Kanal 303 und die Öffnung 300 gebildete Kante 318 an der Mündung kann zudem gefast oder verrundet sein. Die Achse 313 des Kanals ist im wesentlichen parallel zur horizontalen Achse der Basisplatte 3 oder senkrecht zur Achse 308 des Kegelstumpfes 305 ausgerichtet. Der Kanal 303 ist im wesentlichen vertikal und/oder horizontal mittig mit einem Durchmesser DB3 von 15 mm in der Basisplatte 3 eingebracht

Vorzugsweise ist die Basisplatte 3 einteilig ausgebildet, aus einem Stahl mit der Kennzeichnung 1.2083 X 42 Cr 13 und einer Härte von 48 HRC (oder auch Aluminium wie 6082, 6060, 6061, 2014, 7020, 7072) hergestellt, besitzt eine Höhe B31 von 24 mm und einen Querschnitt mit einer Länge B32 von 300 mm mal einer Breite B33 von 200 mm.

### Bezugszeichenliste:

- 1: Kolben
- 2: Zwischenteil
- 3: Basisplatte
- 4: Last
- 5: Gestellsystem
- 6: Spalt oder Spaltlager zwischen der Außenseite 101 des Kolbens und der Innenseite des Zwischenteils 2
- 7: Spalt zwischen äußerer Unterkante 205 der Unterseite 201 des Zwischenteils 2 und der Oberseite 301 der Basisplatte 3
- 8: Ringspalt zwischen Zwischenteil 2 und Kolben 1
- 9: Spalt oder Spaltlager zwischen der Unterseite 201 des Zwischenteils 2 und der Oberseite 301 der Basisplatte 3
- 10: Spalt zwischen der inneren Oberkante 204 des Horizontallagers 2 und dem oberen äußeren Bereich des Vertikallagers 1
- 11: Spaltbreite des Spalts 10

- 100: Hohlraum des Kolbens 1
- 101: Mantelaußenseite des Kolbens 1
- 102: Einschnürung in der Mantelaußenseite 101
- 103: Seitenwand oder Mantel des Kolbens 1
- 104: Öffnungen in der Seitenwand 103
- 105: Äußere Oberkante des Kolbens 1
- 106: Oberseite des Kolbens 1
- 107: Unterseite des Kolbens 1
- 108: Achse des Hohlkörpers oder Kolbens 1
- 109: Umlaufende Vertiefung oder Ringspalt im Mantel 103
- 110: Untere Kante des sechsten Abschnitts 116

- 111: Erster Abschnitt des Kolbens 1
- 112: Zweiter Abschnitt des Kolbens 1
- 113: Dritter Abschnitt des Kolbens 1
- 114: Vierter Abschnitt des Kolbens 1
- 115: Fünfter Abschnitt des Kolbens 1
- 116: Sechster Abschnitt des Kolbens 1
- 117: Siebter Abschnitt des Kolbens 1
- 120: Untere Kante des siebten Abschnitts 117
- 121: Aussparung in der Unterseite 107
- 122: Innenseite des Kolbens 1
- 123: Vertiefung oder Loch in der Unterseite 107
- 124: Loch oder Öffnung in der Deckplatte 125
- 125: Deckplatte
- 127: Ausnehmung oder Vertiefung in der Deckplatte 125
- 128: Umlaufende Ausnehmung in der Innenseite 122
- 129: Aussparung oder Bohrung in der Oberseite 106
- 130: Aussparung oder Bohrung in der Unterseite 107
- 131: Erster Abschnitt der Öffnungen 104
- 132: Zweiter Abschnitt der Öffnungen 104
- 133: Dritter Abschnitt der Öffnungen 104
- 140: oberer Kegelstumpf
- 141: unterer Kegelstumpf

- DK1: Außendurchmesser des ersten Abschnitts 111
- DK2: Außendurchmesser des zweiten Abschnitts 112
- DK3: Außendurchmesser des dritten Abschnitts 113
- DK4: Außendurchmesser des vierten Abschnitts 114
- DK5: Außendurchmesser des fünften Abschnitts 115
- DK6: Außendurchmesser des sechsten Abschnitts 116
- DK7: Außendurchmesser des siebten Abschnitts 117
- DK27: Durchmesser der Ausnehmung 127
- DK28: Durchmesser der Ausnehmung 128
- DK29: Kreisdurchmesser zur Aussparung 129
- DK30: Kreisdurchmesser zur Aussparung 130
- DK31: Durchmesser DK31 des ersten Abschnitts 131
- DK33: Durchmesser des dritten Abschnitts 133
- DKI: Innendurchmesser des Kolbens 1

- K1: Länge oder Höhe des ersten Abschnitts 111
- K2: Länge oder Höhe des zweiten Abschnitts 112
- K3: Länge oder Höhe des dritten Abschnitts 113
- K4: Länge oder Höhe des vierten Abschnitts 114
- K5: Länge oder Höhe des fünften Abschnitts 115
- K6: Länge oder Höhe des sechsten Abschnitts 116
- K61: Fasenbreite
- K7: Länge des siebten Abschnitts 117
- K71: Fasenbreite
- K9: Höhe der Unterkante des Aussparung 109
- K28: Höhe der unteren Kante der Ausnehmung 128
- K27: Tiefe der Ausnehmung 127
- K31: Länge der ersten Abschnitts 131 der Öffnung 104
- K3132: Gesamthöhe aus erstem 131 und zweitem 132 Abschnitt

- KE: Abstand von der Unterseite 107 des Kolbens 1 bis zur Einschnürung 102
- KGES: Gesamthöhe des Kolbens
- KD: Dicke der Deckenplatte 125
- KI: Höhe des Hohlraums 100

- Kα1: Erster oberer Winkel des zweiten Abschnitts 112 der Mantelaußenseite 101 zur Achse 108
- Kα2: Zweiter unterer Winkel des dritten Abschnitts 113 der Mantelaußenseite 101 zur Achse 108
- Kβ1: Fasenwinkel
- Kβ2: Fasenwinkel

- 200: Innenseite des Zwischenteils 2
- 201: Unterseite des Zwischenteils 2
- 202: Wand oder Mantel des Zwischenteils 2
- 203: Loch oder Öffnung in der Wand 202
- 204: Innere Oberkante des Zwischenlagers 2
- 205: Äußere Kante der Unterseite 201 des Zwischenteils 2
- 206: Oberseite des Zwischenteils 2
- 207: Unterseite des Zwischenteils 2
- 208: Achse des Zwischenteils 2
- 209: Deckfläche des Zwischenteils 2
- 210: Grundfläche des Zwischenteils 2
- 211: Bodenplatte
- 212: Öffnung in der Bodenplatte 211
- 213: Oberseite der Bodenplatte 211
- 214: Obere Kante des dritten Abschnitts 223
- 215: Ausnehmung in der Innenseite 200 des Mantels 202
- 216: Innere Kante des ersten Abschnitts 221
- 217: Außenseite des Mantels 202
- 218: Ausnehmung oder Bohrung in der Oberseite 206
- 219: Obere innere Fase an der Oberkante 204
- 221: Erster Abschnitt der Öffnung 212
- 222: Zweiter Abschnitt der Öffnung 212
- 223: Dritter Abschnitt der Öffnung 212
- 231: Erster Abschnitt der Unterseite 207
- 232: Zweiter Abschnitt der Unterseite 207

- DZ0: Durchmesser der Unterseite 207
- DZ1: Durchmesser des ersten Abschnitts 221
- DZ2: Durchmesser des zweiten Abschnitts 222
- DZ3: Durchmesser des dritten Abschnitts 223
- DZ15: Durchmesser der Ausnehmung 215
- DZ18: Kreisdurchmesser zur Ausnehmung 218
- DZ31: Durchmesser des ersten Abschnitts 231 der Unterseite 207
- DZ32: Durchmesser des zweiten Abschnitts 232 der Unterseite 207
- DZI: Innendurchmesser des Zwischenteils 2
- DZA: Außendurchmesser des Zwischenteils 2
- DZW: Wandstärke oder Manteldicke des Zwischenteils 2

- Z1: Höhe des ersten Abschnitts 221
- Z2: Höhe des zweiten Abschnitts 222
- Z3: Höhe des dritten Abschnitts 223
- Z4: Höhe der Öffnungen 203
- Z11: Dicke oder Höhe der Bodenplatte 211
- Z14: Fasenbreite der Kante 214
- Z15: Höhe der Ausnehmung 215
- ZGES: Gesamthöhe des Zwischenteils 2

- Zα: Winkel Zα der Unterseite 207 zur Horizontalen

- 300: Öffnung in der Basisplatte 3
- 301: Oberseite der Basisplatte 3
- 302: Unterseite 302 der Basisplatte 3
- 303: Kanal
- 304: Außenseite der Basisplatte 3
- 305: Kegelstumpf
- 306: Grundfläche des Kegelstumpfes 305
- 307: Deckfläche des Kegelstumpfes 305
- 308: Achse des Kegelstumpfes 305
- 309: Kegelmantel des Kegelstumpfes 305
- 310: Oberer Bereich der Öffnung 300
- 311: Obere Kante der Öffnung 300
- 312: Unterer vorzugsweise kegelstumpfartiger Bereich der Öffnung 300
- 313: Grundfläche des Bereichs 312
- 314: Deckfläche des Bereichs 312
- 315: Mantelfläche des Bereich 312
- 316: Obere Kante des Bereichs 312
- 317: Untere Kante des Bereichs 312
- 318: Kante zwischen oberen Bereich 310 und Deckfläche 307

- DB1: Durchmesser der Öffnung 300 des oberen Bereichs 310
- DB3: Öffnungsdurchmesser des Kanals 303
- DB6: Durchmesser der Grundfläche 306
- DB7: Durchmesser der Deckfläche 307
- DB11: Durchmesser der Öffnung 300 an der Oberseite 301
- DB13: Durchmesser der Grundfläche 313
- DB14: Durchmesser der Deckfläche 314

- B5: Höhe des Kegelstumpfes 305
- B10: Höhe des oberen Bereiches 310
- B11: Fasenbreite der Kante 311
- B12: Höhe des unteren Bereichs 312
- B31: Höhe der Basisplatte 3
- B32: Länge der Basisplatte 3
- B33: Breite der Basisplatte 3

- Bα: Winkel des Mantels 315
- Bβ: Winkel des Mantels 309

## Patentansprüche

1. Luftgelagertes Federsystem zur Schwingungsisolation, insbesondere vertikal und horizontal wirksames Luftlager, umfassend
- eine Basisplatte (3);
- ein Zwischenteil (2) mit einer Bodenplatte (211) und einem Mantel (202), wobei das Zwischenteil (202) auf der Basisplatte (3) beweglich angeordnet ist;
- einen Kolben (1), der innerhalb des Zwischenteils (2) beweglich angeordnet ist und eine Last (4) trägt, die gegenüber der Basisplatte (3) in horizontaler und vertikaler Richtung schwingungsisoliert gestützt werden soll **dadurch gekennzeichnet, daß**
ein Durchmesser DK1 der Oberseite (106) des Kolbens (1) zu der Wandstärke DZW des Mantels (202) des Zwischenteils (2) in einem Verhältnis von 10 bis 36, bevorzugt von 10 bis 16, besonders bevorzugt von 10,7 bis 15,1 steht, und der Kolben (1)
einen beidseitig zumindest abschnittsweise geöffneten hohlen Körper umfaßt, welcher durch
Grundfläche, Deckfläche, Mantel und eine durch den Mittelpunkt der Grundfläche und den Mittelpunkt der Deckfläche verlaufende Achse (108) definiert ist,
wobei die Außenseite (101) des Mantels (103) zumindest abschnittsweise durch einen oberen Kegelstumpf (140) und einen unteren Kegelstumpf (141), vorzugsweise mit kreisförmiger Grundfläche, gebildet ist,
wobei der obere (140) und der untere (141) Kegelstumpf eine gemeinsame Deckfläche haben, so daß in der Außenseite (101) des Mantels (103) eine Einschnürung (102) geformt ist und
die Außenseite (101) des oberen Kegelstumpfs (140) einen oberen Winkel Kα1 insbesondere mit der Achse (108) einschließt und die Außenseite (101) des unteren Kegelstumpfs (141) insbesondere mit der Achse (108) einen unteren Winkel Kα2 einschließt, wobei
der obere Winkel Kα1 0,0001° bis 0,1°, bevorzugt 0,001° bis 0,02°, besonders bevorzugt 0,004° bis 0,006° und der untere Winkel Kα2 0,0001° bis 0,1°, bevorzugt 0,001° bis 0,02°, besonders bevorzugt 0,004° bis 0,006° betragen.

2. Federsystem nach Anspruch 1 **dadurch gekennzeichnet, daß** der Durchmesser DK1 der Oberseite (106) des Kolbens (1) und der Durchmesser DZI der Innenseite (200) des Zwischenteils (2) derart gewählt sind, so daß, insbesondere im Betriebszustand, ein Spalt (10) zwischen dem oberen Bereich der Außenseite (105) des Kolbens (1) und der gegenüberliegenden Wand (200) des Zwischenteils (2) ausgebildet ist.

3. Federsystem nach vorstehendem Anspruch **dadurch gekennzeichnet, daß** die Wandstärke DZW des Zwischenteils (2) zu einer Breite (11) des Spalts (10) in einem Verhältnis von 1700 bis 5000, bevorzugt von 2400 bis 3000 steht.

4. Federsystem nach einem der beiden vorstehenden Ansprüche **dadurch gekennzeichnet, daß** der Spalt (10) eine Breite (11) von 3 µm bis 7 µm, bevorzugt von 5 µm besitzt.

5. Federsystem nach einem der vorstehenden Ansprüche **dadurch gekennzeichnet, daß** zwischen einer Außenseite (101) des Kolbens (1) und der Innenseite (200) des Zwischenteils (2) und zwischen einer Unterseite (201) des Zwischenteils (2) und einer Oberseite (301) der Basisplatte (3) jeweils ein insbesondere konischer Spalt (7, 8), vorzugsweise ein Luftspalt, ausgebildet ist.

6. Federsystem nach einem der vorstehenden Ansprüche **dadurch gekennzeichnet, daß** die Oberseite (106) des hohlen Körpers einen Durchmesser DK1 von 120 mm bis 200 mm, bevorzugt von 161 mm bis 181 mm, besonders bevorzugt von 159 mm bis 163 mm aufweist.

7. Federsystem nach einem der vorstehenden Ansprüche **dadurch gekennzeichnet, daß** der Innendurchmesser DKI des hohlen Körpers im wesentlichen konstant ist und vorzugsweise der Innendurchmesser DKI von 100 mm bis 150 mm, bevorzugt von 120 mm bis 140 mm, besonders bevorzugt von 129 mm bis 133 mm beträgt.

8. Federsystem nach einem der vorstehenden Ansprüche **dadurch gekennzeichnet, daß** sich dem oberen Kegelstumpf (140), welcher insbesondere einem zweiten Abschnitt (112) des Kolbens (1) entspricht, oberhalb ein erster Abschnitt (111), vorzugsweise ein oberer Kantenbereich der Außenseite (101) des Mantels (103), anschließt, der über eine Länge K1 einen im wesentlichen konstanten Außendurchmesser DK1 aufweist.

9. Federsystem nach einem der vorstehenden Ansprüche **dadurch gekennzeichnet, daß** sich dem unteren Kegelstumpf (141), welcher insbesondere einem dritten Abschnitt (113) des Kolbens (1) entspricht, unterhalb ein vierter Abschnitt (114) der Außenseite (101) des Mantels (103) anschließt, der über eine Länge K4 einen im wesentlichen konstanten Außendurchmesser DK4 aufweist.

10. Federsystem nach einem der vorstehenden Ansprüche **dadurch gekennzeichnet, daß** sich dem vierten Abschnitt (114) der Außenseite (101) ein fünfter Abschnitt (115) der Höhe K5 anschließt, welcher als eine umlaufende Vertiefung (109) im Mantel (103) mit einem Außendurchmesser K5 ausgebildet ist.

11. Federsystem nach einem der vorstehenden Ansprüche **dadurch gekennzeichnet, daß** sich dem fünften Abschnitt (115) ein sechster Abschnitt (116) der Außenseite (101) des Mantels (103) anschließt, der über eine Länge K6 einen im wesentlichen konstanten Außendurchmesser DK6 aufweist.

12. Federsystem nach einem der vorstehenden Ansprüche **dadurch gekennzeichnet, daß** die untere Kante (110) des sechsten Abschnitts (116) gefast ist.

13. Federsystem nach einem der vorstehenden Ansprüche **dadurch gekennzeichnet, daß** sich dem sechsten Abschnitt (116) ein siebter Abschnitt (117) der Höhe K7 anschließt, welcher einen gegenüber dem sechsten Abschnitt (116) reduzierten Durchmesser DK7 besitzt.

14. Federsystem nach einem der vorstehenden Ansprüche **dadurch gekennzeichnet, daß** die untere Kante (120) des siebten Abschnitts (117) gefast ist.

15. Federsystem nach einem der vorstehenden Ansprüche **dadurch gekennzeichnet, daß** in der Innenseite (122) des Mantels (103) eine umlaufende Ausnehmung (128), welche in ihrem Querschnitt der Form eines vorzugsweise im wesentlichen rechtwinkligen Dreiecks entspricht, eingebracht ist.

16. Federsystem nach einem der vorstehenden Ansprüche **dadurch gekennzeichnet, daß** in der Ausnehmung (128) oder dem Mantel (103) eine Mehrzahl von Öffnungen (104) eingebracht ist, so daß das innere Volumen des Kolbens (2) mit dem Außenbereich des Kolbens (2) verbunden ist.

17. Federsystem nach vorstehendem Anspruch **dadurch gekennzeichnet, daß** die Öffnungen (104) zumindest abschnittsweise geneigt zur Achse verlaufen.

18. Federsystem nach einem der vorstehenden Ansprüche **dadurch gekennzeichnet, daß** das Zwischenteil (2) einen beidseitig zumindest abschnittsweise geöffneten hohlen Körper, insbesondere zylinderartig ausgestaltet, umfasst,
welcher durch Grundfläche (210), Deckfläche (209), Mantel (202) und eine durch den Mittelpunkt der Grundfläche (210) und den Mittelpunkt der Deckfläche (209) verlaufende Achse (208) definiert ist, wobei
die Öffnung (212) in einer Bodenplatte (211) insbesondere an ihrer Unterseite (207), über eine Höhe Z1 zumindest einen ersten Abschnitt (221) mit einem Durchmesser DZ1 aufweist,
die der Bodenplatte (211) gegenüberliegende Öffnung (202) des Hohlkörpers einen Durchmesser DZI aufweist und vorzugsweise durch die Innenseite des Mantels begrenzt ist,
die Unterseite (207) der Bodenplatte (211) zumindest abschnittsweise mit einer senkrecht zur Achse (208) angeordneten Ebene einen spitzen Winkel Zα einschließt, **dadurch gekennzeichnet daß** das Verhältnis DZI über DZ1 in einem Bereich von 0,7 bis 6,7, bevorzugt von 1 bis 3,6, besonders bevorzugt von 1,6 bis 1,8 liegt.

19. Federsystem nach vorstehendem Anspruch **dadurch gekennzeichnet, daß** der Durchmesser DZI 120 mm bis 200 mm, bevorzugt 161 mm bis 181 mm, besonders bevorzugt 161 mm bis 165 mm beträgt.

20. Federsystem nach einem der beiden vorstehenden Ansprüche **dadurch gekennzeichnet, daß** der Durchmesser DZ1 30 mm bis 180 mm, bevorzugt 50 mm bis 167 mm, besonders bevorzugt 90 mm bis 100 mm beträgt.

21. Federsystem nach einem der vorstehenden Ansprüche 18 bis 20 **dadurch gekennzeichnet, daß** das Verhältnis Außendurchmesser DZA des hohlen Körpers zu seinem Innendurchmesser DZI 1 bis 2,1, bevorzugt 1 bis 1,3, besonders bevorzugt 1,1 bis 1,2 beträgt.

22. Federsystem einem der vorstehenden Ansprüche 18 bis 21 **dadurch gekennzeichnet, daß** der Außendurchmesser DZA 100 mm bis 250 mm, bevorzugt 185 mm bis 205 mm, besonders bevorzugt 185 mm bis 195 mm beträgt.

23. Federsystem nach einem der vorstehenden Ansprüche 18 bis 22 **dadurch gekennzeichnet, daß** der eingeschlossene Winkel Zα 0,0001° bis etwa 0,1°, bevorzugt 0,001° bis 0,035°, besonders bevorzugt 0,007° bis 0,009° beträgt.

24. Federsystem nach einem der vorstehenden Ansprüche 18 bis 23 **dadurch gekennzeichnet, daß** die Unterseite (207) der Bodenplatte (211) einen gegenüber der Außenseite (217) des hohlen Körpers geringeren Durchmesser DZ0 aufweist.

25. Federsystem nach einem der vorstehenden Ansprüche 18 bis 24 **dadurch gekennzeichnet, daß** der Durchmesser DZ0 der Unterseite (207) der Bodenplatte (212) zu dem Außendurchmesser DZA des hohlen Körpers in einem Verhältnis von 0,4 bis 0,99, bevorzugt von 0,7 bis 0,99, besonders bevorzugt von 0,95 bis 0,99 steht.

26. Federsystem nach einem der beiden vorstehenden Ansprüche **dadurch gekennzeichnet, daß** der Durchmesser DZ0 der Unterseite (207) der Bodenplatte (212) in einem Bereich von 95 mm bis 245 mm, bevorzugt von 150 mm bis 203 mm, besonders bevorzugt von 186 mm bis 190 mm steht.

27. Federsystem nach einem der vorstehenden Ansprüche 18 bis 26 **dadurch gekennzeichnet, daß** die äußere untere Kante (205) des Hohlkörpers gefast ist.

28. Federsystem nach einem der vorstehenden Ansprüche 18 bis 27 **dadurch gekennzeichnet, daß** die Öffnung (212) über eine Höhe Z2 einen zweiten Abschnitt (222) mit einem Durchmesser DZ2 aufweist, der kleiner als der Durchmesser DZ1 des ersten Abschnitts (221) ist und vorzugsweise der Durchmesser DZ2 35 mm bis 175 mm, bevorzugt 55 mm bis 165 mm, besonders bevorzugt 95 mm bis 99 mm beträgt.

29. Federsystem nach einem der vorstehenden Ansprüche 18 bis 28 **dadurch gekennzeichnet, daß** die Öffnung (212) einen dritten Abschnitt (223) aufweist, welcher sich insbesondere oberhalb dem zweiten Abschnitt (222) anschließt und über eine Höhe Z3 einen Durchmesser DZ3 von 100 mm bis 175 mm, bevorzugt von 120 mm bis 170 mm, besonders bevorzugt von 144 mm bis 150 mm hat.

30. Federsystem nach einem der vorstehenden Ansprüche 18 bis 29 **dadurch gekennzeichnet, daß** die obere Kante (214) des dritten Abschnitts (223) gefast ist.

31. Federsystem nach einem der vorstehenden Ansprüche 18 bis 30 **dadurch gekennzeichnet, daß** oberhalb der Bodenplatte (211), vorzugsweise oberhalb des dritten Abschnitts (223), zumindest eine umlaufende Ausnehmung (215) in der Innenseite (200) des Mantels (202) eingebracht ist.

32. Federsystem nach einem der vorstehenden Ansprüche 18 bis 31 **dadurch gekennzeichnet, daß** in dem Mantel (202) zumindest ein Loch (203) angeordnet ist und sich von der Innenseite (200) des Mantels (202) zur Außenseite (217) des Mantels (202) erstreckt.

33. Federsystem nach vorstehendem Anspruch **dadurch gekennzeichnet, daß** die obere innere Kante (219) der Innenseite (200) des Mantels (202) gefast ist.

34. Federsystem nach einem der vorstehenden Ansprüche **dadurch gekennzeichnet, daß** die Basisplatte (3) mit zumindest einer eingebrachten Öffnung (300) **dadurch gekennzeichnet ist, daß** der Querschnitt der Öffnung (300) an einer Oberseite (301) der Basisplatte (3) größer als der oder gleich dem Querschnitt der Öffnung (300) an einer Unterseite (302) der Basisplatte (3) ist.

35. Federsystem nach vorstehendem Anspruch **dadurch gekennzeichnet, daß** der Öffnungsdurchmesser DB11 an der Oberseite (301) zum Öffnungsdurchmesser DB14 an der Unterseite (302) in einem Verhältnis von 0,1 bis 1, bevorzugt von 0,25 bis 0,8, besonders bevorzugt von 0,4 bis 0,5 steht.

36. Federsystem nach einem der beiden vorstehenden Ansprüche **dadurch gekennzeichnet, daß** die Öffnung (300) an der Unterseite (302) einen Durchmesser DB14 von 50 mm bis 300 mm bevorzugt von 100 mm bis 200 mm, besonders bevorzugt von 142 mm bis 145 mm aufweist.

37. Federsystem nach einem der vorstehenden Ansprüche 34 bis 36 **dadurch gekennzeichnet, daß** die Öffnung (300) an der Oberseite (301) einen Durchmesser DB11 von 20 mm bis 250 mm, bevorzugt von 50 bis 80, besonders bevorzugt von 62 mm bis 66 mm aufweist.

38. Federsystem nach einem der vorstehenden Ansprüche 34 bis 37 **dadurch gekennzeichnet, daß** die Öffnung (300) zumindest abschnittsweise eine Form besitzt, welche im wesentlichen der Art eines Kegelstumpfes (305), der im wesentlichen durch Grundfläche (306), Deckfläche (307), Kegelmantel (309) und seine Achse (308) definiert ist, entspricht.

39. Federsystem nach einem der vorstehenden Ansprüche 34 bis 38 **dadurch gekennzeichnet, daß** der Durchmesser DB7 der Deckfläche (307) zum Durchmesser DB5 der Grundfläche (306) in einem Verhältnis von 0,1 bis 1, bevorzugt von 0,25 bis 0,7, besonders bevorzugt von 0,4 bis 0,5 steht.

40. Federsystem nach einem der vorstehenden Ansprüche 34 bis 39 **dadurch gekennzeichnet, daß** die Deckfläche (307) einen Durchmesser DB7 von 15 mm bis 240 mm, bevorzugt von 45 bis 75, besonders bevorzugt von 58 mm bis 62 mm aufweist.

41. Federsystem nach einem der vorstehenden Ansprüche 34 bis 40 **dadurch gekennzeichnet, daß** sich der Deckfläche (307) des Kegelstumpfes (305) ein, vorzugsweise kreisförmiger, oberer zylinderartiger Bereich (310) anschließt.

42. Federsystem nach einem der vorstehenden Ansprüche 34 bis 41 **dadurch gekennzeichnet, daß** der Durchmesser DB10 des oberen Bereichs (310) im wesentlichen dem Durchmesser DB7 der Deckfläche (307) des Kegelstumpfes (305) entspricht.

43. Federsystem nach einem der vorstehenden Ansprüche 34 bis 42 **dadurch gekennzeichnet, daß** die obere Kante (311) der Öffnung (300), vorzugsweise des oberen Bereichs (310), eine Fase aufweist.

44. Federsystem nach einem der vorstehenden Ansprüche 34 bis 43 **dadurch gekennzeichnet, daß** sich der Grundfläche (306) des Kegelstumpfes (305) ein, vorzugsweise kreisförmiger, unterer, insbesondere kegelstumpfartiger, Bereich (312) anschließt, welcher einen größeren, vorzugsweise mittleren, Durchmesser DB13, DB14 als die Grundfläche (306) des Kegelstumpfes (305) besitzt.

45. Federsystem nach einem der vorstehenden Ansprüche 34 bis 44 **dadurch gekennzeichnet, daß** der untere Durchmesser DB14 des unteren Bereichs (312) gegenüber dem Durchmesser DB13 vergrößert ist und insbesondere der Öffnung (300) an der Unterseite (302) der Basisplatte (3) entspricht.

46. Federsystem nach einem der vorstehenden Ansprüche 34 bis 45 **dadurch gekennzeichnet, daß** die Basisplatte (3) eine Höhe B31 von 10 mm bis 40 mm, bevorzugt von 18 mm bis 28 mm, besonders bevorzugt von 22 mm bis 26 mm und/oder eine Länge B32 von 100 mm bis 500 mm, bevorzugt von 250 mm bis 350 mm, besonders bevorzugt von 280 mm bis 320 mm und/oder eine Breite B33 von 50 mm bis 400 mm, bevorzugt von 150 mm bis 250 mm, besonders bevorzugt von 180 mm bis 220 mm besitzt.

47. Federsystem nach einem der vorstehenden Ansprüche 34 bis 46 **dadurch gekennzeichnet, daß** die Basisplatte (3) einen vorzugsweise kreisförmigen Kanal (303) aufweist, dessen einer Zugang in die Öffnung (300), vorzugsweise in den Kegelmantel (309) der Öffnung (300), mündet.

48. Schwingungsisolationsmodul umfassend zumindest ein Federsystem nach einem der vorstehenden Ansprüche.

## Claims

1. An air bearing suspension system for vibration isolation, in particular a vertically and horizontally effective air bearing, comprising
- a base plate (3);
- an intermediate part (2) including a bottom plate (211) and a jacket (202), wherein said intermediate part (2) is movably disposed on said base plate (3);
- a piston (1) movably arranged within the intermediate part (2) and carrying a load (4) that is to be supported with vibration isolation in horizontal and vertical directions relative to the base plate (3);
**characterized in that**
a ratio of a diameter DK1 of the top surface (106) of the piston (1) to the wall thickness DZW of the jacket (202) of the intermediate part (2) in from 10 to 36, preferably from 10 to 16, more preferably from 10.7 to 15.1; and the piston (1)
comprises a hollow body that is at least partially open at both ends, which is
defined by a base surface, a top surface, a jacket, and by an axis (108) extending through the center of the top surface and the center of the base surface;
wherein the outer surface (101) of the jacket (103) is at least partly defined by an upper truncated cone (140) and a lower truncated cone (141), preferably with a circular base, and
wherein the upper (140) and the lower (141) truncated cone have a common top surface, so that a constriction (102) is defined in the outer surface (101) of the jacket (103) and wherein
the outer surface (101) of the upper truncated cone (140) in particular forms an upper angle Kα1 with the axis (108), and the outer surface (101) of the lower truncated cone (141) in particular forms a lower angle Kα2 with the axis (108), wherein
the upper angle Kα1 is from 0.0001° to 0.1°, preferably from 0.001° to 0.02°, more preferably from 0.004° to 0.006°, and the lower angle Kα2 is from 0.0001° to 0.1°, preferably from 0.001° to 0.02°, more preferably from 0.004° to 0.006°.

2. The suspension system according to claim 1, **characterized in that** the diameter DK1 of the top surface (106) of the piston (1) and the diameter DZI of the inner surface (200) of the intermediate part (2) are chosen such that in particular in the operating state a gap (10) is formed between the upper portion of the outer surface (105) of the piston (1) and the opposed wall (200) of the intermediate part (2).

3. The suspension system according to the preceding claim, **characterized in that** a ratio of the wall thickness DZW of the intermediate part (2) to a width (11) of the gap (10) is from 1700 to 5000, preferably from 2400 to 3000.

4. The suspension system according to any of the two preceding claims, **characterized in that** the gap (10) has a width (11) from 3 µm to 7 µm, preferably 5 µm.

5. The suspension system according to any of the preceding claims, **characterized in that** an in particular conical gap (7, 8), preferably an air gap, is defined between an outer surface (101) of the piston (1) and the inner surface (200) of the intermediate part (2) as well as between a bottom surface (201) of the intermediate part (2) and a top surface (301) of the base plate (3).

6. The suspension system according to any of the preceding claims, **characterized in that** the top surface (106) of the hollow body has a diameter DK1 from 120 mm to 200 mm, preferably from 161 mm to 181 mm, more preferably from 159 mm to 163 mm.

7. The suspension system according to any of the preceding claims, **characterized in that** the inner diameter DKI of the hollow body is substantially constant, and that preferably the inner diameter DKI is from 100 mm to 150 mm, more preferably from 120 mm to 140 mm, most preferably from 129 mm to 133 mm.

8. The suspension system according to any of the preceding claims, **characterized in that** above the upper truncated cone (140) which in particular corresponds to a second portion (112) of the piston (1), a first portion (111) is adjoining thereto, preferably an upper edge portion of the outer surface (101) of the jacket (103), which has a substantially constant outer diameter DK1 over a length K1.

9. The suspension system according to any of the preceding claims, **characterized in that** below the lower truncated cone (141) which in particular corresponds to a third portion (113) of the piston (1), a fourth portion (114) of the outer surface (101) of the jacket (103) is adjoining thereto, which has a substantially constant outer diameter DK4 over a length K4.

10. The suspension system according to any of the preceding claims, **characterized in that** adjoining the fourth portion (114) of the outer surface (101), a fifth portion (115) of a height K5 is defined, which is formed as a circumferential recess (109) with an outer diameter K5 in the jacket (103).

11. The suspension system according to any of the preceding claims, **characterized in that** adjoining the fifth portion (115), a sixth portion (116) of the outer surface (101) of the jacket (103) is defined, which has a substantially constant outer diameter DK6 over a length K6.

12. The suspension system according to any of the preceding claims, **characterized in that** the lower edge (110) of the sixth portion (116) is chamfered.

13. The suspension system according to any of the preceding claims, **characterized in that** adjoining the sixth portion (116), a seventh portion (117) of height K7 is defined, which has a reduced diameter DK7 as compared to the sixth portion (116).

14. The suspension system according to any of the preceding claims, **characterized in that** the lower edge (120) of the seventh portion (117) is chamfered.

15. The suspension system according to any of the preceding claims, **characterized in that** a circumferential recess (128) is formed in the inner surface (122) of the jacket (103), which recess has a cross section of a shape corresponding to a preferably substantially right-angled triangle.

16. The suspension system according to any of the preceding claims, **characterized in that** a plurality of openings (104) are formed in the recess (128) or the jacket (103), so that the internal volume of the piston (1) is in communication with the outside of the piston (1).

17. The suspension system according to the preceding claim, **characterized in that** the openings (104) extend in an angle to the axis, at least in portions thereof.

18. The suspension system according to any of the preceding claims, **characterized in that** the intermediate part (2) comprises a hollow body, in particular of a cylindrical shape, which is at least partially open at both ends,
which is defined by a base surface (210), top surface (209), a jacket (202), and by an axis (208) extending through the center of the base surface and the center of the top surface; wherein
the opening (212) in a bottom plate (211), in particular at the bottom surface (207) thereof, comprises at least a first portion (221) having a diameter DZ1 over a height Z1;
the opening (202) of the hollow body opposite the bottom plate (211) has a diameter DZI and is preferably bounded by the inner surface of the jacket;
the bottom surface (207) of the bottom plate (211) forms an acute angle Zα with a plane disposed perpendicular to the axis (208), at least in portions thereof;
**characterized in that** the ratio of DZI to DZ1 ranges from 0.7 to 6.7, preferably from 1 to 3.6, more preferably from 1.6 to 1.8.

19. The suspension system according to the preceding claim, **characterized in that** the diameter DZI is from 120 mm to 200 mm, preferably from 161 mm to 181 mm, more preferably from 161 mm to 165 mm.

20. The suspension system according to any of the two preceding claims, **characterized in that** the diameter DZ1 is from 30 mm to 180 mm, preferably from 50 mm to 167 mm, more preferably from 90 mm to 100 mm.

21. The suspension system according to any of the preceding claims 18 to 20, **characterized in that** the ratio of the outer diameter DZA of the hollow body to the inner diameter DZI thereof is from 1 to 2.1, preferably from 1 to 1.3, more preferably from 1.1 to 1.2.

22. The suspension system according to any of the preceding claims 18 to 21, **characterized in that** the outer diameter DZA is from 100 mm to 250 mm, preferably from 185 mm to 205 mm, more preferably from 185 mm to 195 mm.

23. The suspension system according to any of the preceding claims 18 to 22, **characterized in that** the angle Zα which is defined is from 0.0001° to about 0.1°, preferably from 0.001° to 0.035°, more preferably from 0.007° to 0.009°.

24. The suspension system according to any of the preceding claims 18 to 23, **characterized in that** the bottom surface (207) of the bottom plate (211) has a smaller diameter DZ0 as compared to the outer surface (217) of the hollow body.

25. The suspension system according to any of the preceding claims 18 to 24, **characterized in that** a ratio of the diameter DZ0 of the bottom surface (207) of the bottom plate (211) to the outer diameter DZA of the hollow body is from 0.4 to 0.99, preferably from 0.7 to 0.99, more preferably from 0.95 to 0.99.

26. The suspension system according to any of the two preceding claims, **characterized in that** the diameter DZ0 of the bottom surface (207) of the bottom plate (211) ranges from 95 mm to 245 mm, preferably from 150 mm to 203 mm, more preferably from 186 mm to 190 mm.

27. The suspension system according to any of the preceding claims 18 to 26, **characterized in that** the outer lower edge (205) of the hollow body is chamfered.

28. The suspension system according to any of the preceding claims 18 to 27, **characterized in that** the opening (212) comprises a second portion (222) having a diameter DZ2 over a height Z2, which diameter is smaller than the diameter DZ1 of the first portion (221), and that preferably the diameter DZ2 is from 35 mm to 175 mm, more preferably from 55 mm to 165 mm, most preferably from 95 mm to 99 mm.

29. The suspension system according to any of the preceding claims 18 to 28, **characterized in that** the opening (212) comprises a third portion (223), in particular above and adjoining the second portion (222), which has a diameter DZ3 from 100 mm to 175 mm, preferably from 120 mm to 170 mm, more preferably from 144 mm to 150 mm, over a height Z3.

30. The suspension system according to any of the preceding claims 18 to 29, **characterized in that** the upper edge (214) of the third portion (223) is chamfered.

31. The suspension system according to any of the preceding claims 18 to 30, **characterized in that** at least one peripheral recess (215) is formed in the inner surface (200) of the jacket (202) above the base plate (211), preferably above the third portion (223).

32. The suspension system according to any of the preceding claims 18 to 31, **characterized in that** at least one hole (203) is provided in the jacket (202), extending from the inner surface (200) of the jacket (202) to the outer surface (217) of the jacket (202).

33. The suspension system according to the preceding claim, **characterized in that** the upper inner edge (219) of the inner surface (200) of the jacket (202) is chamfered.

34. The suspension system according to any of the preceding claims, **characterized in that** the base plate (3) including at least one opening (300) formed therein is **characterized in that** the cross section of the opening (300) at a top surface (301) of the base plate (3) is greater than or equal to the cross section of the opening (300) at a bottom surface (302) of the base plate (3).

35. The suspension system according to the preceding claim, **characterized in that** a ratio of the diameter DB11 of the opening at the top surface (301) to the diameter DB14 of the opening at the bottom surface (302) is from 0.1 to 1, preferably from 0.25 to 0.8, more preferably from 0.4 to 0.5.

36. The suspension system according to any of the two preceding claims, **characterized in that** at the bottom surface (302), the opening (300) has a diameter DB14 from 50 mm to 300 mm, preferably from 100 mm to 200 mm, more preferably from 142 mm to 145 mm.

37. The suspension system according to any of the preceding claims 34 to 36, **characterized in that** at the top surface (301), the opening (300) has a diameter DB11 from 20 mm to 250 mm, preferably from 50 to 80 mm, more preferably from 62 mm to 66 mm.

38. The suspension system according to any of the preceding claims 34 to 37, **characterized in that** the opening (300) has a shape, at least in portions thereof, that substantially corresponds to a kind of truncated cone (305) which is essentially defined by a base surface (306), a top surface (307), a conical lateral surface (309), and an axis (308) thereof.

39. The suspension system according to any of the preceding claims 34 to 38, **characterized in that** a ratio of the diameter DB7 of the top surface (307) to the diameter DB6 of the base surface (306) is from 0.1 to 1, preferably from 0.25 to 0.7, more preferably from 0.4 to 0.5.

40. The suspension system according to any of the preceding claims 34 to 39, **characterized in that** the top surface (307) has a diameter DB7 from 15 mm to 240 mm, preferably from 45 to 75 mm, more preferably from 58 mm to 62 mm.

41. The suspension system according to any of the preceding claims 34 to 40, **characterized in that** adjoining to the top surface (307) of the truncated cone (305) a preferably circular cylindrical upper portion (310) is defined.

42. The suspension system according to any of the preceding claims 34 to 41, **characterized in that** the diameter DB10 of the upper portion (310) substantially corresponds to the diameter DB7 of the top surface (307) of the truncated cone (305).

43. The suspension system according to any of the preceding claims 34 to 42, **characterized in that** the upper edge (311) of the opening (300), preferably of the upper portion (310), has a chamfer.

44. The suspension system according to any of the preceding claims 34 to 43, **characterized in that** adjoining to the base surface (306) of the truncated cone (305), a preferably circular lower portion (312) of in particular frusto-conical shape is defined, which has a larger preferably mean diameter DB13, DB14 than the base surface (306) of the truncated cone (305).

45. The suspension system according to any of the preceding claims 34 to 44, **characterized in that** the lower diameter DB14 of the lower portion (312) is larger than the diameter DB13 and in particular corresponds to the opening (300) at the bottom surface (302) of the base plate (3).

46. The suspension system according to any of the preceding claims 34 to 45, **characterized in that** the base plate (3) has a height B31 from 10 mm to 40 mm, preferably from 18 mm to 28 mm, more preferably from 22 mm to 26 mm, and/or a length B32 from 100 mm to 500 mm, preferably from 250 mm to 350 mm, more preferably from 280 mm to 320 mm, and/or a width B33 from 50 mm to 400 mm, preferably from 150 mm to 250 mm, more preferably from 180 mm to 220 mm.

47. The suspension system according to any of the preceding claims 34 to 46, **characterized in that** the base plate (3) has a preferably circular passage (303) with one access end thereof opening into the opening (300), preferably into the conical lateral surface (309) of the opening (300).

48. A vibration isolation module, comprising at least one suspension system as claimed in any of the preceding claims.

## Revendications

1. Système d'amortissement monté sur air pour l'isolation des vibrations, en particulier un palier à air à action verticale et horizontale, comportant :
- un plateau de base (3) ;
- une partie intermédiaire (2) avec une plaque de fond (211) et une enveloppe (202), ladite partie intermédiaire (202) étant montée mobile sur le plateau de base (3) ;
- un piston (1) qui est monté mobile à l'intérieur de la partie intermédiaire (2) et porte une charge (4), qui est destinée à être mise en appui de manière isolée des vibrations dans le sens horizontal et vertical par rapport au plateau de base (3), **caractérisé en ce que** :
le rapport entre un diamètre DK1 de la face supérieure (106) du piston (1) et l'épaisseur de paroi DZW de l'enveloppe (202) de la partie intermédiaire (2) est de l'ordre de 10 à 36, de préférence de 10 à 16, encore mieux de 10,7 à 15,1, et
le piston (1) comporte un corps creux ouvert des deux côtés au moins partiellement, lequel est défini par
une surface de base, une surface de recouvrement, une enveloppe et un axe (108) passant par le centre de la surface de base et le centre de la surface de recouvrement,
la face extérieure (101) de l'enveloppe (103) étant formée au moins partiellement par un cône tronqué supérieur (140) et un cône tronqué inférieur (141), de préférence avec une surface de base circulaire,
le cône tronqué supérieur (140) et inférieur (141) ayant une surface de recouvrement commune, de telle sorte qu'un étranglement (102) est formé dans la face extérieure (101) de l'enveloppe (103), et
la face extérieure (101) du cône tronqué supérieur (140) forme notamment avec l'axe (108) un angle supérieur Kα1 et la face extérieure (101) du cône tronqué inférieur (141) forme notamment avec l'axe (108) un angle inférieur Kα2,
l'angle supérieur Kα1 mesurant 0,0001° à 0,1°, de préférence 0,001° à 0,02°, encore mieux 0,004° à 0,006°, et l'angle inférieur Kα2 mesurant 0,0001° à 0,1°, de préférence 0,001° à 0,02°, encore mieux 0,004° à 0,006°.

2. Système d'amortissement selon la revendication 1, **caractérisé en ce que** le diamètre DK1 de la face supérieure (106) du piston (1) et le diamètre DZI de la face intérieure (200) de la partie intermédiaire (2) sont choisis de telle sorte que, en particulier à l'état de fonctionnement, une fente (10) se forme entre la zone supérieure de la face extérieure (105) du piston (1) et la paroi (200) opposée de la partie intermédiaire (2).

3. Système d'amortissement selon la revendication précédente, **caractérisé en ce que** le rapport entre l'épaisseur de paroi DZW de la partie intermédiaire (2) et une largeur (11) de la fente (10) est de l'ordre de 1700 à 5000, de préférence de 2400 à 3000.

4. Système d'amortissement selon l'une des deux revendications précédentes, **caractérisé en ce que** la fente (10) a une largeur (11) de 3 µm à 7 µm, de préférence de 5 µm.

5. Système d'amortissement selon l'une quelconque des revendications précédentes, **caractérisé en ce qu'**une fente (7, 8) en particulier conique, de préférence une fente d'air, est formée respectivement entre une face extérieure (101) du piston (1) et la face intérieure (200) de la partie intermédiaire (2) et entre une face inférieure (201) de la partie intermédiaire (2) et une face supérieure (301) du plateau de base (3).

6. Système d'amortissement selon l'une quelconque des revendications précédentes, **caractérisé en ce que** la face supérieure (106) du corps creux a un diamètre DK1 de 120 mm à 200 mm, de préférence de 161 mm à 181 mmm, encore mieux de 159 mm à 163 mm.

7. Système d'amortissement selon l'une quelconque des revendications précédentes, **caractérisé en ce que** le diamètre intérieur DKI du corps creux est sensiblement constant et, de préférence, le diamètre intérieur DKI mesure 100 mm à 150 mm, de préférence 120 mm à 140 mm, encore mieux 129 mm à 133 mm.

8. Système d'amortissement selon l'une quelconque des revendications précédentes, **caractérisé en ce que** le cône tronqué supérieur (140), qui correspond en particulier à une deuxième partie (112) du piston (1), est prolongé dans le haut par une première partie (111), de préférence une zone de bord supérieure de la face extérieure (101) de l'enveloppe (103), qui, sur une longueur K1, a un diamètre extérieur DK1 sensiblement constant.

9. Système d'amortissement selon l'une quelconque des revendications précédentes, **caractérisé en ce que** le cône tronqué inférieur (141), qui correspond en particulier à une troisième partie (113) du piston (1), est prolongé dans le bas par une quatrième partie (114) de la face extérieure (101) de l'enveloppe (103), qui, sur une longueur K4, a un diamètre extérieur DK4 sensiblement constant.

10. Système d'amortissement selon l'une quelconque des revendications précédentes, **caractérisé en ce que** la quatrième partie (114) de la face extérieure (101) est prolongée par une cinquième partie (115) de hauteur K5, laquelle est réalisée avec un diamètre extérieur K5 en formant un creux (109) périphérique dans l'enveloppe (103).

11. Système d'amortissement selon l'une quelconque des revendications précédentes, **caractérisé en ce que** la cinquième partie (115) est prolongée par une sixième partie (116) de la face extérieure (101) de l'enveloppe (103), laquelle comporte, sur une longueur K6, un diamètre extérieur DK6 sensiblement constant.

12. Système d'amortissement selon l'une quelconque des revendications précédentes, **caractérisé en ce que** le bord inférieur (110) de la sixième partie (116) est chanfreiné.

13. Système d'amortissement selon l'une quelconque des revendications précédentes, **caractérisé en ce que** la sixième partie (116) est prolongée par une septième partie (117) de hauteur K7, laquelle possède un diamètre DK7 plus petit que la celui de la sixième partie (116).

14. Système d'amortissement selon l'une quelconque des revendications précédentes, **caractérisé en ce que** le bord inférieur (120) de la septième partie (117) est chanfreiné.

15. Système d'amortissement selon l'une quelconque des revendications précédentes, **caractérisé en ce que** dans la face intérieure (122) de l'enveloppe (103) est ménagé un évidement (128) périphérique dont la section transversale correspond à la forme d'un triangle, de préférence sensiblement un triangle rectangle.

16. Système d'amortissement selon l'une quelconque des revendications précédentes, **caractérisé en ce qu'**une pluralité d'ouvertures (104) sont ménagées dans l'évidement (128) ou dans l'enveloppe (103), de telle sorte que le volume intérieur du piston (2) communique avec la zone extérieure du piston (2).

17. Système d'amortissement selon l'une quelconque des revendications précédentes, **caractérisé en ce que** les ouvertures (104) sont, au moins partiellement, inclinées par rapport à l'axe.

18. Système d'amortissement selon l'une quelconque des revendications précédentes, **caractérisé en ce que** la partie intermédiaire (2) comporte un corps creux ouvert des deux côtés au moins partiellement, en particulier un corps creux cylindrique,
lequel est défini par une surface de base (210), une surface de recouvrement (209), une enveloppe (202) et un axe (208) passant par le centre de la surface de base (210) et par le centre de la surface de recouvrement (209),
l'ouverture (212) comportant dans une plaque de fond (211), en particulier sur sa face inférieure (207), sur une hauteur Z1, au moins une première partie (221) avec un diamètre DZ1,
l'ouverture (202), face à la plaque de fond (211), du corps creux a un diamètre DZI et est délimitée de préférence par la face intérieure de l'enveloppe,
la face inférieure (207) de la plaque de fond (211) forme au moins partiellement un angle aigu Zα avec un plan perpendiculaire à l'axe (208), **caractérisée en ce que** le rapport DZI sur DZ1 se situe dans une plage de 0,7 à 6,7, de préférence de 1 à 3,6, encore mieux de 1,6 à 1,8.

19. Système d'amortissement selon l'une quelconque des revendications précédentes, **caractérisé en ce que** le diamètre DZI mesure 120 mm à 200 mm, de préférence 161 mm à 181 mm, encore mieux 161 mm à 165 mm.

20. Système d'amortissement selon l'une des deux revendications précédentes, **caractérisé en ce que** le diamètre DZI mesure 30 mm à 180 mm, de préférence 50 mm à 167 mm, encore mieux 90 mm à 100 mm.

21. Système d'amortissement selon l'une quelconque des revendications précédentes 18 à 20, **caractérisé en ce que** le rapport entre le diamètre extérieur DZA du corps creux et son diamètre intérieur DZI est de l'ordre de 1 à 2,1, de préférence de 1 à 1,3, encore mieux de 1,1 à 1,2.

22. Système d'amortissement selon l'une quelconque des revendications précédentes 18 à 21, **caractérisé en ce que** le diamètre extérieur DZA mesure 100 mm à 250 mm, de préférence 185 mm à 205 mm, encore mieux 185 mm à 195 mm.

23. Système d'amortissement selon l'une quelconque des revendications précédentes 18 à 22, **caractérisé en ce que** l'angle inscrit Zα mesure 0,0001° à environ 0,1°, de préférence 0,001° à 0,035°, encore mieux 0,007° à 0,009°.

24. Système d'amortissement selon l'une quelconque des revendications précédentes 18 à 23, **caractérisé en ce que** la face inférieure (207) de la plaque de fond (211) comporte un diamètre DZ0 inférieur à celui de la face extérieure (217) du corps creux.

25. Système d'amortissement selon l'une quelconque des revendications précédentes 18 à 24, **caractérisé en ce que** le rapport entre le diamètre DZ0 de la face inférieure (207) de la plaque de fond (212) et le diamètre extérieur DZA du corps creux est de l'ordre de 0,4 à 0,99, de préférence de 0,7 à 0,99, encore mieux de 0,95 à 0,99.

26. Système d'amortissement selon l'une des deux revendications précédentes, **caractérisé en ce que** le diamètre DZ0 de la face inférieure (207) de la plaque de fond (212) se situe dans une plage de 95 mm à 245 mm, de préférence de 150 mmm à 203 mm, encore mieux de 186 mm à 190 mm.

27. Système d'amortissement selon l'une quelconque des revendications précédentes 18 à 26, **caractérisé en ce que** le bord inférieur (205) extérieur du corps creux est chanfreiné.

28. Système d'amortissement selon l'une quelconque des revendications précédentes 18 à 27, **caractérisé en ce que** l'ouverture (212) sur une hauteur Z2 comporte une deuxième partie (222) avec un diamètre DZ2 qui est inférieur au diamètre DZ1 de la première partie (221), et de préférence le diamètre DZ2 mesure 35 mm à 175 mm, de préférence 55 mm à 165 mm, encore mieux 95 mm à 99 mm.

29. Système d'amortissement selon l'une quelconque des revendications précédentes 18 à 28, **caractérisé en ce que** l'ouverture (212) comporte une troisième partie (223) qui est située dans le prolongement, en particulier par le haut, de la deuxième partie (222) et possède sur une hauteur Z3 un diamètre DZ3 de 100 mm à 175 mm, de préférence de 120 mm à 170 mm, encore mieux de 144 mm à 150 mm.

30. Système d'amortissement selon l'une quelconque des revendications précédentes 18 à 29, **caractérisé en ce que** le bord supérieur (214) de la troisième partie (223) est chanfreiné.

31. Système d'amortissement selon l'une quelconque des revendications précédentes 18 à 30, **caractérisé en ce que**, au-dessus de la plaque de fond (211), de préférence au-dessus de la troisième partie (223), est ménagé au moins un évidement (215) périphérique dans la face intérieure (200) de l'enveloppe (202).

32. Système d'amortissement selon l'une quelconque des revendications précédentes 18 à 31, **caractérisé en ce que**, dans l'enveloppe (202), est disposé au moins un trou (203) qui s'étend depuis la face intérieure (200) de l'enveloppe (202) jusqu'à la face extérieure (217) de l'enveloppe (202).

33. Système d'amortissement selon la revendication précédente, **caractérisé en ce que** le bord supérieur (219) intérieur de la face intérieure (200) de l'enveloppe (202) est chanfreiné.

34. Système d'amortissement selon l'une quelconque des revendications précédentes, **caractérisé en ce que** le plateau de base (3), dans lequel est ménagée au moins une ouverture (300), est **caractérisé en ce que** la section transversale de l'ouverture (300) sur une face supérieure (301) du plateau de base (3) est supérieure ou égale à la section transversale de l'ouverture (300) sur une face inférieure (302) du plateau de base (3).

35. Système d'amortissement selon la revendication précédente, **caractérisé en ce que** le rapport entre le diamètre DB11 de l'ouverture sur la face supérieure (301) et le diamètre DB14 de l'ouverture sur la face inférieure (302) est de l'ordre de 0,1 à 1, de préférence de 0,25 à 0,8, encore mieux de 0,4 à 0,5.

36. Système d'amortissement selon l'une des deux revendications précédentes, **caractérisé en ce que** l'ouverture (300) sur la face inférieure (302) a un diamètre DB14 de 50 mm à 300 mm, de préférence de 100 mm à 200 mm, encore mieux de 142 mm à 145 mm.

37. Système d'amortissement selon l'une quelconque des revendications précédentes 34 à 36, **caractérisé en ce que** l'ouverture (300) sur la face supérieure (301) a un diamètre DB11 de 20 mm à 250 mm, de préférence de 50 mm à 80 mm, encore mieux de 62 mm à 66 mm.

38. Système d'amortissement selon l'une quelconque des revendications précédentes 34 à 37, **caractérisé en ce que** l'ouverture (300) possède au moins partiellement une forme qui correspond sensiblement à un cône tronqué (305) qui est défini sensiblement par la surface de base (306), la surface de recouvrement (307), l'enveloppe du cône (309) et son axe (308).

39. Système d'amortissement selon l'une quelconque des revendications précédentes 34 à 38, **caractérisé en ce que** le rapport entre le diamètre DB7 de la surface de recouvrement (307) et le diamètre DB5 de la surface de base (306) est de l'ordre de 0,1 à 1, de préférence de 0,25 à 0,7, encore mieux de 0,4 à 0,5.

40. Système d'amortissement selon l'une quelconque des revendications précédentes 34 à 39, **caractérisé en ce que** la surface de recouvrement (307) a un diamètre DB7 de 15 mm à 240 mm, de préférence de 45 mm à 75 mm, encore mieux de 58 mm à 62 mm.

41. Système d'amortissement selon l'une quelconque des revendications précédentes 34 à 40, **caractérisé en ce qu'**une zone cylindrique (310) supérieure, de préférence circulaire, se situe dans le prolongement de la surface de recouvrement (307) du cône tronqué (305).

42. Système d'amortissement selon l'une quelconque des revendications précédentes 34 à 41, **caractérisé en ce que** le diamètre DB10 de la zone supérieure (310) correspond sensiblement au diamètre DB7 de la surface de recouvrement (307) du cône tronqué (305).

43. Système d'amortissement selon l'une quelconque des revendications précédentes 34 à 42, **caractérisé en ce que** le bord supérieur (311) de l'ouverture (300), de préférence de la zone supérieure (310), comporte un chanfrein.

44. Système d'amortissement selon l'une quelconque des revendications précédentes 34 à 43, **caractérisé en ce que** dans le prolongement de la surface de base (306) du cône tronqué (305) est située une zone inférieure (312), de préférence circulaire, en particulier en forme de cône tronqué, qui possède un diamètre DB13, DB14, de préférence moyen, supérieur à celui de la surface de base (306) du cône tronqué (305).

45. Système d'amortissement selon l'une quelconque des revendications précédentes 34 à 44, **caractérisé en ce que** le diamètre inférieur DB14 de la zone inférieure (312) est plus grand que le diamètre DB13 et correspond en particulier à l'ouverture (300) sur la face inférieure (302) du plateau de base (3).

46. Système d'amortissement selon l'une quelconque des revendications précédentes 34 à 45, **caractérisé en ce que** le plateau de base (3) a une hauteur B31 de 10 mm à 40 mm, de préférence de 18 mm à 28 mm, encore mieux de 22 mm à 26 mm et/ou une longueur B32 de 100 mm à 500 mm, de préférence de 250 mm à 350 mm, encore mieux de 280 mm à 320 mm et/ou une largeur B33 de 50 mm à 400 mm, de préférence de 150 mm à 250 mm, encore mieux de 180 mm à 220 mm.

47. Système d'amortissement selon l'une quelconque des revendications précédentes 34 à 46, **caractérisé en ce que** le plateau de base (3) comporte un canal (303) de préférence circulaire, dont une entrée débouche dans l'ouverture (300), de préférence dans l'enveloppe conique (309) de l'ouverture (300).

48. Module d'isolation des vibrations comportant au moins un système d'amortissement selon l'une quelconque des revendications précédentes.
